# EUROPEAN PATENT APPLICATION

(11) **EP 4 425 346 A1**
(43) Date of publication of application: **04.09.2024**
(21) Application number: 22900210.0
(22) Date of filing: 05.11.2022
(51) Int. Cl.: G06F 13/16

(54) **STORAGE SYSTEM, AND DATA PROCESSING METHOD AND APPARATUS**

(30) Priority: 02.12.2021 CN 202111458796; 24.02.2022 CN 202210176916
(71) Applicant: Huawei Technologies Co., Ltd., Shenzhen, Guangdong 518129 (CN)
(72) Inventor: FENG, Rui, Shenzhen, Guangdong 518129 (CN)
(74) Representative: Goddar, Heinz J.
(86) International application number: PCT/CN2022/130150
(87) International publication number: WO 2023/098405

(57) **Abstract**

A storage system, a data processing method, and an apparatus are disclosed, to improve efficiency and reliability of a data service without performing transmission of redundant data across controller nodes. The storage system includes a first controller and a second controller, and the two controllers communicate with a memory by sharing a same interface card. The shared interface card stores data from the first controller in a cache of the shared interface card, and asynchronously persists data in the cache of the shared interface card to the memory. After the first controller is faulty, the data that is from the first controller and that is stored by the shared interface device may be read by an interface device from a cache (or a memory) of the interface device, and provided to the second controller.

## Description

### TECHNICAL FIELD

This application relates to the field of computer technologies, and in particular, to a storage system, a data processing method, and an apparatus.

### BACKGROUND

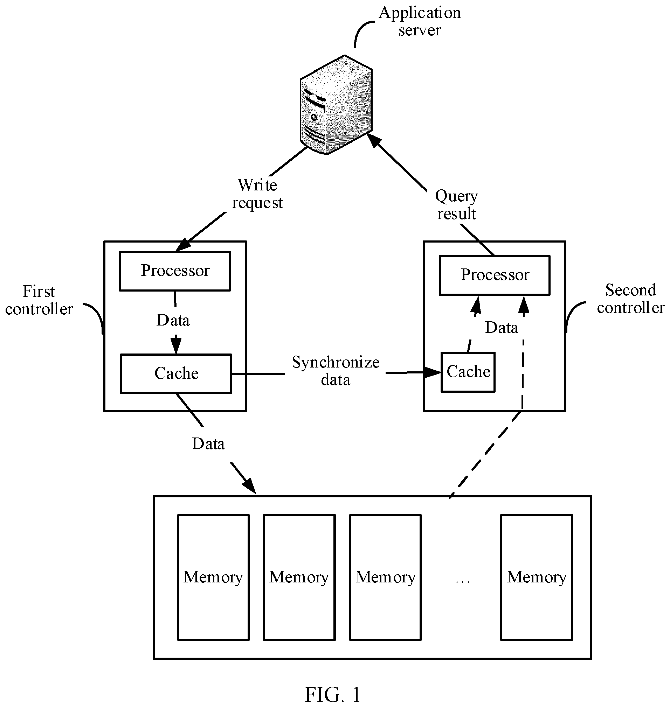

To provide a reliable data service for a user, a dual-controller storage system is widely used. The dual-controller storage system includes at least one dual-controller unit, and each dual-controller unit includes at least two controllers that share a storage resource. FIG. 1 shows an example of a dual-controller storage system. As shown in FIG. 1, a dual-controller unit may include a first controller and a second controller, and the first controller and the second controller share at least one memory. The first controller may write data into the shared memory based on a write request sent by an application server. Once the first controller is faulty, the second controller may query, in the shared memory, for the data written by the first controller, to ensure availability of the data written by the first controller.

Because a memory access latency of a cache is typically far less than a memory access latency of an external memory, a controller typically uses a cache of the controller to asynchronously store data in a shared memory. In the dual-controller unit shown in FIG. 1, to ensure availability of data in a cache of the first controller after the first controller is faulty, data updated by the first controller in the local cache needs to be synchronized to a cache of the second controller in real time. In this way, the second controller can find the data in the cache of the second controller and in the shared memory, and return a query result to the application server. In the synchronization process, transmission of redundant data needs to be performed across controller nodes in the storage system, causing a waste of transmission resources and storage resources of the storage system.

### SUMMARY

This application provides a storage system, a data processing method, and an apparatus, to improve efficiency and reliability of a data service without performing transmission of redundant data across controller nodes.

According to a first aspect, this application provides a storage system. The storage system includes a first controller and a second controller, and the first controller and the second controller separately communicate with at least one memory via a shared interface device on which a cache is disposed. The first controller is configured to send a write instruction to the shared interface device. The shared interface device is configured to temporarily store, in the cache, first data to be written as instructed by the write instruction, and is further configured to asynchronously write the first data temporarily stored in the cache into a first memory in the at least one memory. The first memory may include one or more memories.

The first data may be all or a part of data to be written as instructed by the write instruction. When the first data is a part of the data to be written as instructed by the write instruction, a manner of storing, by the shared interface device, other data (excluding the first data) to be written as instructed by the write instruction is not limited in this application. Optionally, the shared interface device may synchronously write, into the first memory or a memory (other than the first memory) in the at least one memory, the other data to be written as instructed by the write instruction.

Optionally, the second controller is configured to send, to the shared interface device, a write instruction instructing to write third data. The shared interface device is further configured to temporarily store the third data in the cache, and is further configured to asynchronously write the third data temporarily stored in the cache into one or more memories in the at least one memory. For example, the shared interface device may asynchronously write the third data into the first memory.

The third data may be all or a part of the data to be written as instructed by the write instruction. When the third data is a part of the data to be written as instructed by the write instruction, a manner of storing, by the shared interface device, other data (excluding the third data) to be written as instructed by the write instruction is not limited in this application. Optionally, the shared interface device may synchronously write, into the first memory or a memory (other than the first memory) in the at least one memory, the other data to be written as instructed by the write instruction.

The first controller and the second controller may jointly use the cache of the shared interface device to asynchronously write data into the first memory connected to the shared interface device. This helps improve utilization of a cache resource of the shared interface device and utilization of a memory resource connected to the shared interface device.

Optionally, the second controller is configured to send a read instruction to the shared interface device after the first controller is faulty, where the read instruction instructs to query for second data, and the second data may be all or a part of the first data. The shared interface device is further configured to obtain, according to the read instruction, all or a part of the second data from the cache, and provide all or the part of the second data to the second controller. If the shared interface device obtains a part of the second data from the cache, and other data in the second data is persisted or backed up, the shared interface device may query for and obtain the other data in the second data from a memory connected to the shared interface device (for example, the first memory).

The second data may be all or a part of data to be read as instructed by the read instruction. When the second data is a part of the data to be read as instructed by the read instruction, a manner of obtaining, by the shared interface device, other data (excluding the second data) to be read as instructed by the read instruction is not limited in this application. Optionally, the shared interface device may obtain the other data from the one or more memories in the at least one memory.

On one hand, because an access latency of the cache of the shared interface device is less than an access latency of a memory connected to the shared interface device, the shared interface device uses the cache to temporarily store the first data for the first controller, to asynchronously write the first data into the first memory connected to the shared interface device. This helps reduce a storage latency of the first data and improve efficiency of a data service provided by the storage system. On the other hand, the second controller does not need to perform mirror backup on the data written by the first controller into the cache. After the first controller is faulty, the shared interface device may provide, for the second controller, the data written for the first controller in the cache. This helps ensure availability of data in the cache without adding redundant data transmission across nodes, and improve reliability of the data service provided by the storage system.

Optionally, the cache includes a first partition and a second partition, the first partition is used to temporarily store data for the first controller, the second partition is used to temporarily store data for the second controller, and a query range in which the shared interface device obtains all or the part of the second data in the cache includes the first partition and the second partition.

That the first partition is different from the second partition means that a storage space corresponding to the first partition in the cache and a storage space corresponding to the second partition in the cache do not overlap. This helps reduce conflicts generated when the shared interface device writes data in the cache for different controllers, and improve the reliability of the data service provided by the storage system. After the shared interface device receives the read instruction, it may be difficult for the shared interface device to determine a location of the second data in the cache. To improve availability of the data in the cache, a query range in which the shared interface device queries for the second data may include the first partition and the second partition. This helps obtain, for the second controller, data written for the first controller and the second controller in the cache.

Optionally, the write instruction instructs to write the data into the first memory.

Optionally, the shared interface device is specifically configured to temporarily store the first data in the first partition, temporarily store the third data in the second partition, and consecutively send the first data temporarily stored in the first partition and the third data temporarily stored in the second partition to the first memory. Optionally, the write instruction sent by the first controller may instruct to write the first data into the first memory, and the write instruction sent by the second controller may instruct to write the third data into the first memory.

The data that is in the first partition and the second partition and that is to be written into a same memory is consecutively sent to the first memory. This helps the first memory consecutively execute write tasks of the first data and the second data. If storage locations of the first data and the second data in the first memory are adjacent or even consecutive, a change of a write location of the first memory is reduced, and storage efficiency of the first memory is improved.

Optionally, the at least one memory further includes a second memory, where a memory access latency of the second memory is less than that of the first memory. The shared interface device is further configured to synchronously back up the first data to the second memory after receiving the write instruction. Optionally, the shared interface device may obtain, according to the read instruction, all or the part of the second data from the second memory when the cache is abnormal, and provide all or the part of the second data to the second controller.

The data written into the cache is synchronously backed up to the second memory connected to the shared interface device. In this way, even if the cache is abnormal, for example, data that is in the cache and that is not persisted is lost, the shared interface device can still find the data in the second memory. This helps improve the availability of the data in the cache and improve the reliability of the data service provided by the storage system.

Optionally, the storage system further includes a third memory connected to the first controller. The first controller is further configured to back up the first data to the third memory, and forward, via the shared interface device when the cache is abnormal, the data backed up in the third memory to a fourth memory in the at least one memory. Optionally, the shared interface device is further configured to obtain, according to the read instruction, all or the part of the second data from the fourth memory when the cache is abnormal, and provide all or the part of the second data to the second controller. The fourth memory may be the first memory, the second memory, or another memory connected to the shared interface device.

In this way, even if the cache is abnormal, for example, the data that is in the cache and that is not persisted is lost, the shared interface device can still find, in the at least one memory, the data in the cache. This helps improve the availability of the data in the cache and improve the reliability of the data service provided by the storage system.

Optionally, the data includes service data and/or metadata of the service data, and the service data is data to be written as requested by a data write request received by the first controller.

Optionally, the shared interface device is an interface card or a disk enclosure, the interface card is disposed (for example, inserted into) in the first controller or the second controller, and the disk enclosure is configured to install the at least one memory.

Optionally, the shared interface device communicates with the first controller by using a peripheral component interconnect express PCIe protocol or a serial attached small computer system interface SAS protocol.

Optionally, the shared interface device communicates with the second controller by using the peripheral component interconnect express PCIe protocol or the SAS protocol.

Optionally, each memory in the at least one memory has only a single port for communication with the shared interface device, and port reconstruction does not need to be performed on the memory. This helps reduce costs.

According to a second aspect, this application provides a data processing method, and the method may be applied to a storage system. The storage system includes a first controller and a second controller, and the first controller and the second controller separately communicate with at least one memory via a shared interface device on which a cache is disposed. The method may include: The first controller sends a write instruction to the shared interface device. The shared interface device temporarily stores, in the cache, first data to be written as instructed by the write instruction, and then asynchronously writes the first data temporarily stored in the cache into a first memory in the at least one memory.

Optionally, the second controller may send, to the shared interface device, a write instruction instructing to write third data. The shared interface device may temporarily store the third data in the cache, and asynchronously write the third data temporarily stored in the cache into one or more memories in the at least one memory. For example, the shared interface device may asynchronously write the third data into the first memory.

Optionally, the second controller sends a read instruction to the shared interface device after the first controller is faulty, where the read instruction instructs to query for second data, and the second data is all or a part of the first data. The shared interface device obtains, according to the read instruction, all or a part of the second data from the cache, and provides all or the part of the second data to the second controller.

Optionally, the cache includes a first partition and a second partition, the first partition is used to temporarily store data for the first controller, the second partition is used to temporarily store data for the second controller, and a query range in which the shared interface device obtains all or the part of the second data in the cache includes the first partition and the second partition.

Optionally, that the shared interface device temporarily stores the first data in the cache includes: The shared interface device temporarily stores the first data in the first partition. That the shared interface device temporarily stores the third data in the cache includes: The shared interface device temporarily stores the third data in the second partition. That the shared interface device asynchronously writes the first data and the third data that are temporarily stored in the cache into the first memory may include: The shared interface device consecutively sends the first data temporarily stored in the first partition and the third data temporarily stored in the second partition to the first memory. Optionally, the write instruction sent by the first controller may instruct to write the first data into the first memory, and the write instruction sent by the second controller may instruct to write the third data into the first memory.

Optionally, the at least one memory further includes a second memory, where a memory access latency of the second memory is less than that of the first memory. The method further includes: The shared interface device synchronously backs up the first data to the second memory after receiving the write instruction. The shared interface device obtains, according to the read instruction, all or the part of the second data from the second memory when the cache is abnormal, and provides all or the part of the second data to the second controller.

Optionally, the storage system further includes a third memory connected to the first controller, and the method further includes: The first controller backs up the first data to the third memory. The first controller forwards, via the shared interface device when the cache is abnormal, the data backed up in the third memory to a fourth memory in the at least one memory. The shared interface device obtains, according to the read instruction, all or the part of the second data from the fourth memory after the shared interface device receives the read instruction and when the cache is abnormal, and provides all or the part of the second data to the second controller.

Optionally, the data includes service data and/or metadata of the service data, and the service data is data to be written as requested by a data write request received by the first controller.

Optionally, the shared interface device is an interface card or a disk enclosure, the interface card is inserted into the first controller or the second controller, and the disk enclosure is configured to install the at least one memory.

Optionally, the shared interface device communicates with the first controller and/or the second controller by using a peripheral component interconnect express PCIe protocol.

Optionally, each memory in the at least one memory has only a single port for communication with the shared interface device.

The first controller, the second controller, and the shared interface device in the storage system provided in the first aspect may be configured to perform the method provided in the second aspect. Therefore, for technical effects brought by the method provided in the second aspect, refer to the technical effects obtained by the foregoing corresponding storage system. Details are not described herein again.

According to a third aspect, this application provides a data processing method, and the method may be applied to a shared interface device in a storage system. The storage system includes a first controller and a second controller, and the first controller and the second controller separately communicate with at least one memory via the shared interface device on which a cache is disposed. The method includes: The shared interface device receives a write instruction that is sent by the first controller and that instructs to write first data. The shared interface device temporarily stores the first data in the cache, and then asynchronously writes the first data temporarily stored in the cache into a first memory in the at least one memory.

Optionally, the method further includes: The shared interface device receives a write instruction that is sent by the second controller and that instructs to write third data. The shared interface device temporarily stores the third data in the cache, and then asynchronously writes the third data temporarily stored in the cache into one or more memories (for example, the first memory) in the at least one memory.

Optionally, the shared interface device receives a read instruction sent by the second controller after the first controller is faulty, where the read instruction instructs to query for second data, and the second data is all or a part of the first data. The shared interface device obtains, according to the read instruction, all or a part of the second data from the cache, and provides all or the part of the second data to the second controller.

Optionally, the cache includes a first partition and a second partition, the first partition is used to temporarily store data for the first controller, the second partition is used to temporarily store data for the second controller, and a query range in which the shared interface device obtains all or the part of the second data in the cache includes the first partition and the second partition.

Optionally, that the shared interface device temporarily stores the first data in the cache includes: The shared interface device temporarily stores the first data in the first partition. That the shared interface device temporarily stores the third data in the cache includes: The shared interface device temporarily stores the third data in the second partition. That the shared interface device asynchronously writes the first data and the third data that are temporarily stored in the cache into the first memory may include: The shared interface device consecutively sends the first data temporarily stored in the first partition and the third data temporarily stored in the second partition to the first memory. Optionally, the write instruction sent by the first controller may instruct to write the first data into the first memory, and the write instruction sent by the second controller may instruct to write the third data into the first memory.

Optionally, the at least one memory further includes a second memory, where a memory access latency of the second memory is less than that of the first memory. The method further includes: The shared interface device synchronously backs up the first data to the second memory after receiving the write instruction. The shared interface device obtains, according to the read instruction, all or the part of the second data from the second memory when the cache is abnormal, and provides all or the part of the second data to the second controller.

Optionally, the storage system further includes a third memory connected to the first controller. The method further includes: The shared interface device obtains, according to the read instruction, all or the part of the second data from a connected fourth memory after the shared interface device receives the read instruction and when the cache is abnormal, and provides all or the part of the second data to the second controller. All or the part of the second data in the fourth memory is forwarded by the first controller from the third memory to the fourth memory via the shared interface device after the cache is abnormal, and data in the third memory includes the first data backed up by the first controller.

Optionally, the data includes service data and/or metadata of the service data, and the service data is data to be written as requested by a data write request received by the first controller.

Optionally, the shared interface device is an interface card or a disk enclosure, the interface card is inserted into the first controller or the second controller, and the disk enclosure is configured to install the at least one memory.

Optionally, the shared interface device communicates with the first controller and/or the second controller by using a peripheral component interconnect express PCIe protocol.

Optionally, each memory in the at least one memory has only a single port for communication with the shared interface device.

The shared interface device provided in the first aspect may be configured to perform the method provided in the third aspect. Therefore, for technical effects brought by the method provided in the third aspect, refer to the technical effects obtained by the foregoing corresponding storage system. Details are not described herein again.

According to a fourth aspect, this application provides a shared interface device, where a cache may be disposed on the shared interface device. The shared interface device may include a receiving module, a storage module, and a query module. The receiving module is configured to receive a write instruction that is sent by a first controller and that instructs to write first data. The first controller and a second controller separately communicate with at least one memory via the shared interface device. The storage module is configured to temporarily store the first data in a cache of the storage module, and is further configured to asynchronously write the first data temporarily stored in the cache into a first memory in the at least one memory.

Optionally, the receiving module is further configured to receive a write instruction that is sent by the second controller and that instructs to write third data. The storage module is configured to temporarily store first data in the cache of the storage module, and is further configured to asynchronously write the third data temporarily stored in the cache into one or more memories in the at least one memory. For example, the storage module may asynchronously write the third data into the first memory.

Optionally, the receiving module is further configured to receive a read instruction sent by the second controller after the first controller is faulty, where the read instruction instructs to query for second data, and the second data is all or a part of the first data. The query module is configured to obtain, according to the read instruction, all or a part of the second data from the cache, and provide all or the part of the second data to the second controller.

Optionally, the cache includes a first partition and a second partition, the first partition is used to temporarily store data for the first controller, the second partition is used to temporarily store data for the second controller, and a query range in which the query module obtains all or the part of the second data in the cache includes the first partition and the second partition.

Optionally, the storage module is specifically configured to temporarily store the first data in the first partition, temporarily store the third data in the second partition, and consecutively send the first data temporarily stored in the first partition and the third data temporarily stored in the second partition to the first memory. Optionally, the write instruction sent by the first controller may instruct to write the first data into the first memory, and the write instruction sent by the second controller may instruct to write the third data into the first memory.

Optionally, the at least one memory further includes a second memory, where a memory access latency of the second memory is less than that of the first memory. The storage module is further configured to synchronously back up the first data to the second memory after receiving the write instruction, obtain, according to the read instruction, all or the part of the second data from the second memory when the cache is abnormal, and provide all or the part of the second data to the second controller.

Optionally, the storage system further includes a third memory connected to the first controller. The query module is further configured to obtain, according to the read instruction, all or the part of the second data from a connected fourth memory after the receiving module receives the read instruction and when the cache is abnormal, and provide all or the part of the second data to the second controller. All or the part of the second data in the fourth memory is forwarded by the first controller from the third memory to the fourth memory via the shared interface device after the cache is abnormal, and data in the third memory includes the first data backed up by the first controller.

Optionally, the data includes service data and/or metadata of the service data, and the service data is data to be written as requested by a data write request received by the first controller.

Optionally, the shared interface device is an interface card or a disk enclosure, the interface card is inserted into the first controller or the second controller, and the disk enclosure is configured to install the at least one memory.

Optionally, the shared interface device communicates with the first controller and/or the second controller by using a peripheral component interconnect express PCIe protocol.

Optionally, each memory in the at least one memory has only a single port for communication with the shared interface device.

The shared interface device provided in the fourth aspect may have a function of the shared interface device in the storage system provided in the first aspect. Therefore, for technical effects brought by the shared interface device provided in the fourth aspect, refer to the technical effects obtained by the foregoing corresponding shared interface device. Details are not described herein again.

According to a fifth aspect, this application provides a computing device. A first controller and a second controller separately communicate with at least one memory via the computing device. The computing device includes a memory and a processor, the memory includes a cache, and the processor executes computer instructions stored in the memory, to enable the computing device to perform the method described in any possible implementation of the third aspect.

Optionally, the computing device is an interface card or a disk enclosure, the interface card is inserted into the first controller or the second controller, and the disk enclosure is configured to install the at least one memory.

Optionally, the computing device communicates with the first controller and/or the second controller by using a peripheral component interconnect express PCIe protocol.

According to a sixth aspect, this application provides a computer-readable storage medium, including instructions. When the instructions are run on a computing device, the computing device is enabled to perform the method described in any possible implementation of the third aspect.

An eleventh aspect of this application provides a computer program product. When program code included in the computer program product is executed by a computer device, the method described in any possible implementation of the third aspect in this application can be implemented.

The apparatuses provided in this application may be configured to perform the method steps performed by the shared interface device in the foregoing storage system. Therefore, for technical effects that can be obtained by the apparatuses in this application, refer to the technical effects obtained by the foregoing storage system. Details are not described herein again.

The first controller and the second controller in the claims and the summary of this application may be, for example, any two different controllers of a storage node in the description of embodiments of this application. For example, the first controller may be a controller a, and the second controller may be a controller b; or the first controller may be a controller b, and the second controller may be a controller a.

The shared interface device in the claims and the summary of this application may be, for example, any shared interface device that is of the storage node in the description of embodiments of this application and that is connected to at least two controllers. For example, the shared interface device may be a shared interface device a or a shared interface device b. For example, the shared interface device is the shared interface device a, and the shared interface device may be specifically an interface card a or a disk enclosure a.

The at least one memory in the claims and the summary of this application may be, for example, at least one memory connected to the shared interface device a or the shared interface device b in the description of embodiments of this application. For example, the shared interface device is the interface card a. The at least one memory may include a memory a1, a memory a2, and a memory a3.

The first memory in the claims and the summary of this application may be, for example, any one or more memories connected to the shared interface device a or the shared interface device b in the description of embodiments of this application. For example, the shared interface device is the interface card a. The first memory may include the memory a2.

For example, the first controller and the second controller are respectively the controller a and the controller b mentioned in the description of embodiments of this application. The write instruction sent by the first controller in the claims and the summary of this application may be, for example, a write instruction 1 or a write instruction 1-1 mentioned in the description of embodiments of this application, and the write instruction sent by the second controller may be, for example, a write instruction 2 or a write instruction 2-2 mentioned in the description of embodiments of this application.

That the first controller and the second controller are respectively the controller a and the controller b mentioned in the description of embodiments of this application is still used as an example. The first data and the third data in the claims and the summary of this application may be respectively, for example, target data 1 and target data 2 mentioned in the description of embodiments of this application.

The read instruction in the claims and the summary of this application may be, for example, a read instruction 1, a read instruction 1-1, a read instruction 2, or a read instruction 2-1 mentioned in the description of embodiments of this application. The second data in the claims and the summary of this application may be, for example, target data 3 or target data 4 mentioned in the description of embodiments of this application. Optionally, the target data 3 or the target data 4 may be all or a part of the target data 1, or the target data 3 or the target data 4 may be all or a part of the target data 2.

For example, the first controller is the controller a in the description of embodiments of this application. The third memory in the claims and the summary of this application may include, for example, a memory c1 connected to the controller a in the description of embodiments of this application.

For example, the first controller is the controller b in the description of embodiments of this application. The third memory in the claims and the summary of this application may include, for example, a memory c2 connected to the controller b in the description of embodiments of this application.

For example, the first controller is the controller a in the description of embodiments of this application. The second memory in the claims and the summary of this application may include, for example, the memory a1 in the description of embodiments of this application.

For example, the shared interface device in the claims and the summary of this application is the interface card a in the description of embodiments of this application. The first partition and the second partition may be respectively, for example, a partition 1 and a partition 2 in a cache of the interface card a.

### BRIEF DESCRIPTION OF DRAWINGS

FIG. 1 shows an example of a structure of an existing storage system;
FIG. 2 shows an example of a possible system architecture to which an embodiment of this application is applicable;
FIG. 3-1, FIG. 3-2, and FIG. 3-3 each show an example of a possible structure of a storage node in a storage system in this application;
FIG. 4 shows an example of a possible data processing method performed by a storage node in this application;
FIG. 5 shows an example of a process in which an interface card a persists data in a cache to a memory;
FIG. 6, FIG. 7, and FIG. 8 each show an example of another possible data processing method performed by a storage node in this application; and
FIG. 9 shows an example of a possible structure of a shared interface device in this application.

### DESCRIPTION OF EMBODIMENTS

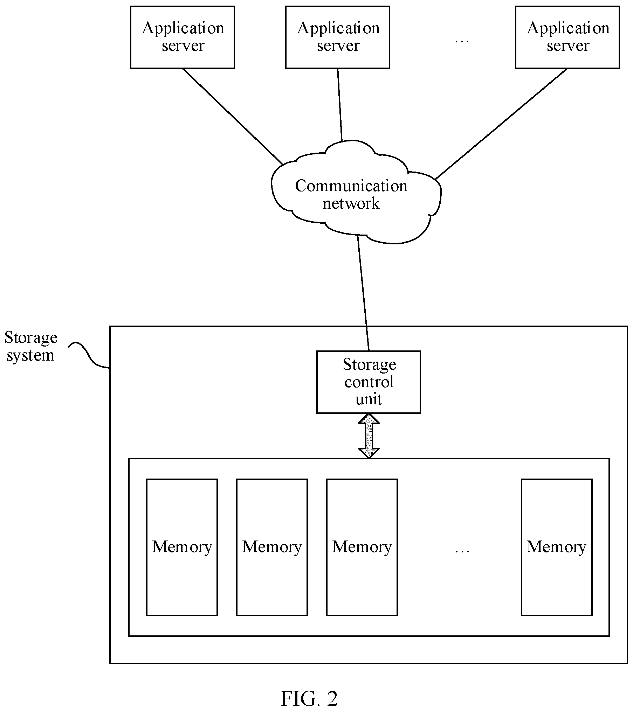

Embodiments of this application provide a storage system, a data processing method, and an apparatus. The following first describes, with reference to FIG. 2, an example of a system architecture to which embodiments of this application are applicable.

FIG. 2 shows an example of a system architecture to which an embodiment of this application is applicable. The system architecture corresponding to FIG. 2 includes a storage system and at least one application server. The application server and the storage system may be connected via a communication network. Refer to FIG. 2. The storage system may include one storage node, and a storage control unit and one or more memories are disposed in the storage node. The memory may be a hard disk drive (hard disk drive, HDD), a solid-state drive (solid-state drive, SSD), a storage class memory (storage class memory, SCM), or another type of storage disk. Alternatively, the memory may be a storage server, or another type of computing device configured to provide a storage service.

FIG. 2 shows merely an example of rather than a limitation on the system architecture to which an embodiment of this application is applicable. The system architecture corresponding to FIG. 2 may include more or fewer application servers or storage nodes. Embodiments of this application may be applied to a central storage system, or may be applied to a distributed storage system. Optionally, the system architecture to which embodiments of this application are applicable may include one or more storage nodes, for example, the storage node shown in FIG. 2. The storage node shown in FIG. 2 may be understood as a storage array or a storage server. That each storage node in the distributed storage system is the storage node shown in FIG. 2 is not limited in this embodiment of this application.

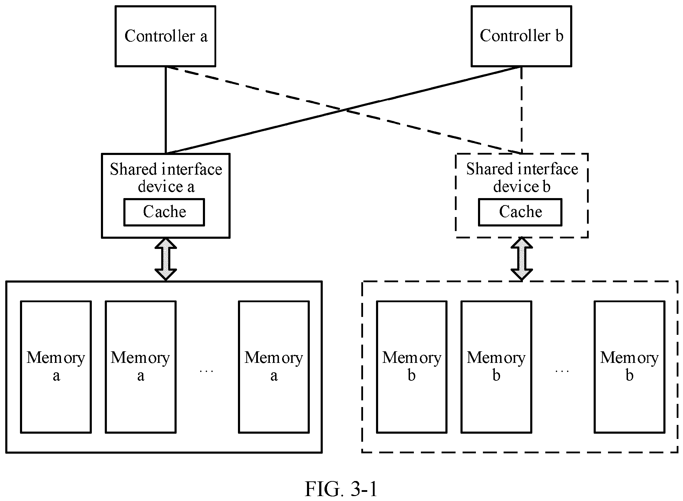

To improve reliability of the storage system, the storage control unit of the storage node shown in FIG. 2 may include at least two controllers. An example in which two controllers are disposed in the storage control unit is used. The storage node shown in FIG. 2 may be specifically shown in FIG. 3-1.

Refer to FIG. 3-1. The storage node may include a controller a and a controller b. The controller a and the controller b may be understood as controllers in a storage array, or controllers in a storage server. The storage node may further include a shared interface device a and a shared interface device b. The shared interface device a and the shared interface device b are separately configured to connect to at least one memory. For ease of differentiation, a memory connected to the shared interface device a is referred to as a memory a, and a memory connected to the shared interface device b is referred to as a memory b. The memory a and the memory b may be understood as memories in the at least one memory shown in FIG. 2. The controller a and the controller b may communicate with the at least one memory a under the shared interface device a via the shared interface device a, and the controller a and the controller b may communicate with the at least one memory b under the shared interface device b via the shared interface device b.

Refer to FIG. 3-1. Caches may be disposed on the shared interface device a and the shared interface device b. The controller a and the controller b may be both connected to the shared interface device a, to jointly access the cache in the shared interface device a and the connected memory a. The controller a and the controller b may be further both connected to the shared interface device b, to jointly access the cache in the shared interface device b and the connected memory b.

Optionally, power protection for the cache in the shared interface device a may be implemented via the controller a and/or the controller b, and power protection for the cache in the shared interface device b may be implemented via the controller a and/or the controller b. For example, when both the controller a and the controller b are normal, the power protection for the cache in the shared interface device a may be implemented via the controller a, and the power protection for the cache in the shared interface device b may be implemented via the controller b. After the controller a is faulty, the power protection for the cache in the shared interface device a and the power protection for the cache in the shared interface device b may be implemented via the controller b.

FIG. 3-1 is an example of rather than a limitation on a structure of the storage node. Optionally, the storage node corresponding to FIG. 3-1 may include more controllers, may include more or fewer shared interface devices, and may include more or fewer memories a or b. For example, the storage node corresponding to FIG. 3-1 may not include the shared interface device b or the memory b under the shared interface device b.

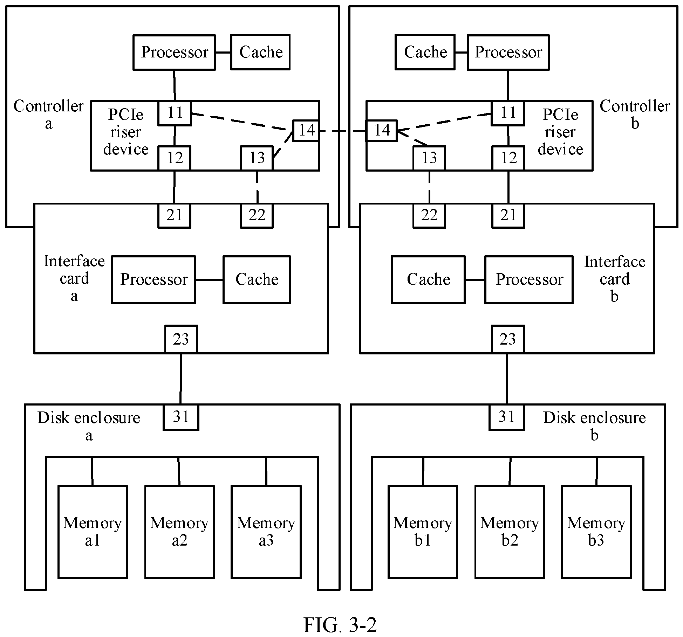

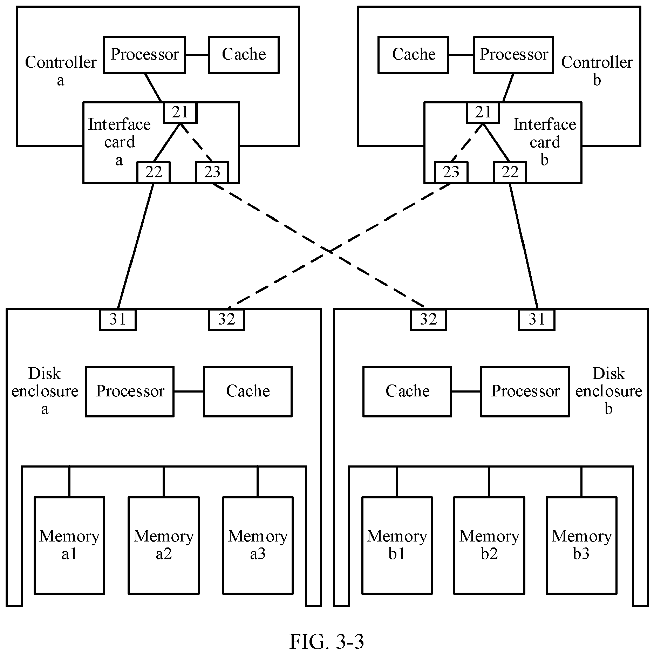

The shared interface device a or the shared interface device b shown in FIG. 3-1 is configured to perform, on data between the controller and the memory, at least one of the following operations: caching, processing, and transferring. "Transferring" may refer to transparent transmission or protocol format conversion. FIG. 3-2 and FIG. 3-3 each show an example of a possible structure of the storage node corresponding to FIG. 3-1. The following describes two different types of shared interface devices with reference to storage nodes shown in FIG. 3-2 and FIG. 3-3.
1. The shared interface device is an interface card.

In the storage node corresponding to FIG. 3-2, a shared interface device a may be an interface card a connected to a controller a, and a shared interface device b may be an interface card b connected to a controller b. Optionally, the shared interface device a is connected to the controller a in a plug-in manner. For example, the interface card a may be connected to a peripheral component interconnect (peripheral component interconnect, PCI) riser device of the controller a. Similarly, the shared interface device b may be connected to the controller b in a plug-in manner. For example, the interface card b may be connected to a PCIe riser device of the controller b.

Refer to FIG. 3-2. The controller a and the controller b each may include a processor, a cache, and a riser device, and the interface card a and the interface card b each may include a processor, a cache, and a plurality of ports.

The processor may include one or more general purpose processors, for example, a central processing unit (central processing unit, CPU), or a combination of a CPU and a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), generic array logic (generic array logic, GAL), or any combination thereof.

In FIG. 3-2, an example in which the riser device in the controller a or the controller b is a PCIe riser device is used. The riser device may be another type of riser device, for example, an extended industry standard architecture (extended industry standard architecture, EISA) riser device. The riser device may also be referred to as a bus, and may include an address bus, a data bus, a control bus, and the like.

The cache may include a volatile memory (volatile memory), for example, a random access memory (random access memory, RAM). The cache may alternatively include a non-volatile memory (non-volatile memory), for example, a read-only memory (read-only memory, ROM), a flash memory (flash memory), a hard disk drive (hard disk drive, HDD), or a solid-state drive (solid-state drive, SSD). The cache may alternatively include a combination of the foregoing types.

The PCIe riser device may include a plurality of ports. In FIG. 3-2, each square marked with a number represents a port. Refer to FIG. 3-2. The plurality of ports in the PCIe riser device may include a port 11, a port 12, a port 13, and a port 14. The plurality of ports of the interface card a and the interface card b may separately include a port 21, a port 22, and a port 23.

Refer to a solid connection line in FIG. 3-2. The processor of the controller a may access the interface card a sequentially through the port 11 and the port 12 in the controller a and the port 21 of the interface card a, to implement communication connection between the controller a and the interface card a. Refer to a dashed connection line in FIG. 3-2. The processor of the controller b may access the interface card a sequentially through the port 11 and the port 14 in the controller b, the port 14 and the port 13 in the controller a, and the port 22 of the interface card a, to implement communication connection between the controller b and the interface card a.

Similarly, optionally, the processor of the controller b may access the interface card b sequentially through the port 11 and the port 12 in the controller b and the port 21 of the interface card b, to implement communication connection between the controller b and the interface card b. The processor of the controller a may access the interface card b sequentially through the port 11 and the port 14 in the controller a, the port 14 and the port 13 in the controller b, and the port 22 of the interface card b, to implement connection between the controller a and the interface card b.

As described above, the interface card a and the interface card b may be respectively connected to the controller a and the controller b upward. In addition, the interface card a may be further connected to one or more memories a downward through the ports, and the interface card b may be further connected to one or more memories b downward through the ports. Refer to FIG. 3-2. The interface card a may be connected to a port 31 of a disk enclosure a through the port 23, to access a memory a1, a memory a2, and a memory a3 that are installed in the disk enclosure a. The interface card b may be connected to a disk enclosure b through the port 23, to access a memory b1, a memory b2, and a memory b3 that are in the disk enclosure b. Each of the memory a1, the memory a2, and the memory a3 may be understood as one memory a, and each of the memory b1, the memory b2, and the memory b3 may be understood as one memory b.

Optionally, the interface card a and/or the interface card b may be a serial attached SCSI (serial attached SCSI, SAS) card or a redundant array of independent disks (redundant array of independent disks, RAIDs) card, where the SCSI is short for a small computer system interface (small computer system interface). In the storage node corresponding to FIG. 3-2, optionally, the connection between the interface card a and the controller a may be based on a peripheral component interconnect express (peripheral component interconnect express, PCIe) protocol, and the connection between the interface card a and the memory a may be based on a SAS protocol, a fibre channel (Fibre Channel, FC) protocol, a gigabit Ethernet (Gigabit Ethernet, GE) protocol, or the like. Similarly, the connection between the interface card b and the controller b may be based on the PCIe protocol, and the connection between the interface card b and the memory b may be based on the SAS protocol, the FC protocol, the GE protocol, or the like.

Because the cache is disposed in the interface card a, and the controller a and the controller b are both connected to the interface card a, the controller a and the controller b may not only share the memory a under the interface card a, but also share the cache in the interface card a. Similarly, because the cache is disposed in the interface card b, and the controller a and the controller b are connected to the interface card b, the controller a and the controller b may not only share the memory b under the interface card b, but also share the cache in the interface card b.

Still refer to FIG. 3-2. Through only one port of one interface card (for example, the interface card a or the interface card b), the controller a and the controller b can share a memory under the interface card. This helps save a port resource of the interface card. In this way, the interface card can connect to more memories, and a storage resource shared by the controller a and the controller b is expanded. In addition, the memory connected to the interface card may be provided with only one port used to connect to the interface card, to separately communicate with the controller a and the controller b, and port reconstruction does not need to be performed on the memory. This helps reduce costs. For example, the disk enclosure and the memory under the disk enclosure in FIG. 3-2 may be understood as one memory. The disk enclosure only needs to be provided with one port connected to the interface card, to separately communicate with the controller a and the controller b, and port reconstruction does not need to be performed on the disk enclosure.

In FIG. 3-2, that the interface card communicates with a storage disk through the disk enclosure is used as an example instead of a limitation. Optionally, the interface card may be directly connected to a single-port hard disk. Optionally, the interface card may communicate with another type of computing device configured to provide a storage service, for example, a storage server.

FIG. 3-2 is an example of rather than a limitation on a structure of the storage node. Optionally, the storage node corresponding to FIG. 3-2 may include more controllers, may include more or fewer interface cards, and may include more or fewer memories. For example, the storage node may not include the interface card b or the memory under the interface card b.

2. The shared interface device is a disk enclosure.

In the storage node corresponding to FIG. 3-3, a shared interface device a may be a disk enclosure a, and a shared interface device b may be a disk enclosure b. Optionally, one or more memories a connected to a disk enclosure may be installed in the disk enclosure a, and one or more memories b connected to the disk enclosure may be installed in the disk enclosure b. Optionally, the one or more memories a may include at least one type of storage disk of an HDD and an SSD. Similarly, optionally, the one or more memories b may include at least one type of storage disk of the HDD and the SSD.

Refer to FIG. 3-3. A controller a and a controller b each may include a processor and a cache, and a disk enclosure a and a disk enclosure b may include a processor, a cache, a plurality of ports, and a hard disk mounting mechanism (for example, a groove shown in FIG. 3-3). For the processor and the cache, refer to related content in FIG. 3-2. Details are not described herein again. Refer to FIG. 3-3. The plurality of ports of the disk enclosure a and the disk enclosure b may separately include a port 21 and a port 22. A memory (for example, a memory a1, a memory a2, or a memory a3) is disposed behind a mounting mechanism of the disk enclosure a, and may be separately in communication with the processor of the disk enclosure a. A memory (for example, a memory b1, a memory b2, or a memory b3) is disposed behind a mounting mechanism of the disk enclosure b, and may be separately in communication with the processor of the disk enclosure b.

Optionally, the controller a may access the disk enclosure a sequentially through the port 21 and the port 22 of the interface card a and a port 31 of the disk enclosure a, to implement communication connection between the controller a and the disk enclosure a. The controller b may access the disk enclosure a sequentially through the port 21 and the port 23 of the interface card b and a port 32 of the disk enclosure a, to implement communication connection between the controller b and the disk enclosure a.

Similarly, optionally, the controller b may access the disk enclosure b sequentially through the port 21 and the port 22 of the interface card b and a port 31 of the disk enclosure b, to implement communication connection between the controller b and the disk enclosure b. The controller a may access the disk enclosure b sequentially through the port 21 and the port 23 of the interface card a and a port 32 of the disk enclosure b, to implement communication connection between the controller a and the disk enclosure b.

As described above, the disk enclosure a and the disk enclosure b may be respectively connected to the controller a and the controller b upward. In addition, the disk enclosure a may be further connected to one or more memories a downward through the ports, and the disk enclosure b may be further connected to one or more memories b downward through the ports. Refer to FIG. 3-3. The disk enclosure a may access the memory a1, the memory a2, and the memory a3 that are installed in the disk enclosure a, and the disk enclosure b may access the memory b1, the memory b2, and the memory b3 that are installed in the disk enclosure b. Each of the memory a1, the memory a2, and the memory a3 may be understood as one memory a, and each of the memory b1, the memory b2, and the memory b3 may be understood as one memory b.

Because the cache is disposed in the disk enclosure a, and the controller a and the controller b are both connected to the disk enclosure a, the controller a and the controller b may not only share the memory a under the disk enclosure a, but also share the cache in the disk enclosure a. Similarly, because the cache is disposed in the disk enclosure b, and the controller a and the controller b are connected to the disk enclosure b, the controller a and the controller b may not only share the memory b under the disk enclosure b, but also share the cache in the disk enclosure b.

The disk enclosure a and the disk enclosure b may be both connected to the controller a, and the connection between the disk enclosure a and the controller a and the connection between the disk enclosure b and the controller a may be based on a SAS protocol, a fibre channel (Fibre Channel, FC) protocol, a gigabit Ethernet (Gigabit Ethernet, GE) protocol, or the like. Similarly, the disk enclosure b and the disk enclosure a are both connected to the controller b, and the connection between the disk enclosure b and the controller b may be based on the SAS protocol, the fibre channel (Fibre Channel, FC) protocol, the gigabit Ethernet (Gigabit Ethernet, GE) protocol, or the like.

FIG. 3-3 is an example of rather than a limitation on a structure of the storage node. Optionally, the storage node corresponding to FIG. 3-3 may include more controllers, may include more or fewer interface cards, may include more or fewer disk enclosures, and may include more or fewer memories. For example, the storage node corresponding to FIG. 3-3 may not include the disk enclosure b or a memory in the disk enclosure b. For example, the interface card a or the interface card b may be connected to more memories.

In the storage node shown in FIG. 3-1, FIG. 3-2, or FIG. 3-3, one connection line between ports may represent one or more connection links. A connection line between the port 12 and the port 21 in FIG. 3-2 is used as an example. A connection link represented by the connection line may include a PCIe bus used for transmission of a data signal and a control bus used for transmission of a control signal. Transmission of, for example, control signals, handshake information, and status information of the controller a and the interface card a may be performed through the control bus. The control signal may include a start signal that enables the interface card a to start working. The start signal may include, for example, an in-position signal (used to determine whether the interface card a has been inserted into a correct slot), a power-on enabling signal, a clock signal, and a reset signal of the interface card a. The handshake information may be used by the controller a and the interface card a to perform port negotiation, to determine a transmission bandwidth, a transmission rate, and the like of a transmission channel between the controller a and the interface card a.

Optionally, in the storage node shown in FIG. 3-1, FIG. 3-2, or FIG. 3-3, there may be a connection link between the controller a and the controller b. For example, the connection link is used for transmission of heartbeat information, to monitor a status of each other in real time.

The foregoing describes, by using FIG. 3-1, FIG. 3-2, and FIG. 3-3, the connection link needed by the controller a and the controller b to invoke the shared interface device (for example, the shared interface device a and the shared interface device b). The following describes, by using an example with reference to a mode of invoking the shared interface device by the controller a and the controller b, control logic of invoking the shared interface device by the controller.

The mode of invoking the shared interface device by the controller in the storage node is not limited in this embodiment of this application. Optionally, the invoking mode may be an active/standby mode or an active-active mode.

### (1) Active/standby mode

In the active/standby mode, controllers in the storage node have different positions for the shared interface device, and are classified into an active controller and a standby controller of the shared interface device.

It is assumed that the controller a and the controller b are respectively the active controller and the standby controller of the shared interface device a. In a normal working state, the controller a can invoke the shared interface device a to execute a data storage service and a data query service, and the controller b cannot invoke the shared interface device a to execute a data storage service or a data query service. When the controller a is faulty, the controller b may take over the shared interface device a, to invoke the shared interface device a to execute the data storage service and/or the data query service, to ensure availability of data in the cache of the shared interface device a and availability of data in the memory a.

The storage node shown in FIG. 3-2 is used as an example to describe a possible specific active/standby switchover process. In a normal working state, the port 21 of the interface card a is in an active state, and the port 22 is in an inactive state. In this way, the interface card a can be invoked by the controller a, but cannot be invoked by the controller b. When the controller a is faulty, the controller a may notify the controller b by using a heartbeat signal between the controller a and the controller b or a power-off interrupt signal, and the controller b may contend to become the active controller of the interface card a. The controller b may notify the interface card a of the active/standby switchover event, to enable the port 21 of the interface card a to enter the inactive state and stop being invoked by the controller a, and enable the port 22 of the interface card a to enter the active state and start to be invoked by the controller b.

### (2) Active-active mode

In the active-active mode, controllers in the storage node have a same position for the shared interface device. Optionally, the controller a and the controller b may alternately invoke the shared interface device a or the shared interface device b at different time. When the controller a is abnormal and cannot work, the controller b may invoke the shared interface device a and/or the shared interface device b to execute a data query service, to ensure availability of data in the cache of the shared interface device a and/or the shared interface device b and availability of data in the connected memory.

When a condition for invoking a shared interface device is met, a controller in a storage node may take over the corresponding shared interface device, to provide the data storage service and the data query service using a cache of the corresponding shared interface device and a memory connected to the shared interface device. The following describes a process in which the controller in the storage node invokes the shared interface device to provide the data storage service and the data query service.

The following describes a process in which the controller a provides the data storage service through the interface card a.

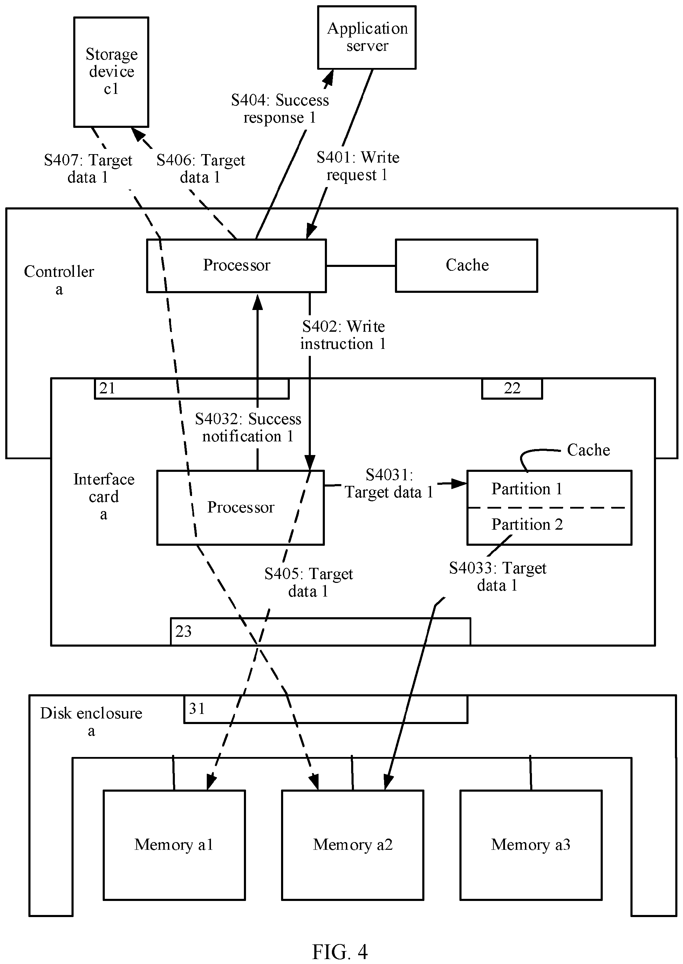

FIG. 4 shows an example of a method procedure in which a controller a stores data through an interface card a. A structure other than an application server in FIG. 4 may be, for example, the storage node shown in FIG. 3-2. To simplify the accompanying drawing, FIG. 4 does not specifically show a controller b, an interface card b, and a memory under the interface card b, and does not show a PCIe riser device in the controller a. A possible embodiment of a data processing method provided in this application may include the following steps S401 to S404.

S401: The application server sends a write request 1 to the controller a.

The application server may send the data write request 1 (the write request 1 for short) to the controller a, where the write request 1 is used to request to store service data 1. A storage system in this embodiment of this application may provide a data storage service over a software system, for example, a file system, a block storage system, or an object storage system. Correspondingly, the service data to be written as requested by the write request 1 may be data in a form of a file, a data block, an object, or the like.

Step S401 is an optional step. That the write request 1 is sent by the application server is not limited in this embodiment of this application. Optionally, the write request 1 may be sent by a client in a terminal, or may be sent by a software system used by the storage system. Optionally, the service data 1 may be user data or system data generated by the software system. A deployment location of the software system is not limited in this embodiment of this application. For example, the software system may be deployed in the controller a, the controller b, or another controller, the software system may be deployed in the application server, or the software system is deployed in an independent server.

S402: The controller a sends a write instruction 1 to the interface card a.

The controller a may send the write instruction 1 to the interface card a based on the write request 1, where the write instruction 1 instructs to store data 1.

The data 1 includes but is not limited to the service data 1. Optionally, the controller a may generate metadata 1 that describes the service data 1. Correspondingly, the data 1 may include the service data 1 and the metadata 1. For example, when the service data 1 is persisted to a memory a2, the metadata 1 may describe a storage location of the service data 1 in the memory a2. The storage location may be a logical address or a physical address.

S403: The interface card a stores, by using a cache and the memory a2, the data 1 to be written as instructed by the write instruction 1.

After receiving the write instruction, the interface card a may store the data 1 by using the cache and the memory a2. Because the controller a and the controller b share a cache of the interface card a, to reduce conflicts generated by writing data into the cache of the interface card a by the controller a and the controller b, optionally, the cache of the interface card a may be divided into a write partition (referred to as a partition 1) of the controller a and a write partition (referred to as a partition 2) of the controller b. The partition 1 and the partition 2 are two different storage spaces in the cache of the interface card a. That the partition 1 and the partition 2 are different may mean that the storage space corresponding to the partition 1 and the storage space corresponding to the partition 2 do not overlap. For example, in step S403, the interface card a may store the data 1 by using the partition 1 in the cache of the interface card a and the memory a2.

After receiving the write instruction 1, the interface card a may asynchronously write target data 1 in the data 1 into the memory a2 by using the cache. Optionally, the write instruction 1 may indicate a persistence address of to-be-written data, and the persistence address may point to at least one memory under the interface card a. In this embodiment of this application, an example in which the write instruction 1 indicates that a persistence address of the target data 1 points to the memory a2 is used. The persistence address may be a logical address or a physical address in the memory a2. For example, the persistence address may be a logical block addressing (logical block addressing, LBA) mode.

That the interface card a asynchronously writes the target data 1 into the memory a2 by using the cache may mean that the interface card a first temporarily stores the target data 1 in the cache (for example, in the partition 1), and then writes the target data 1 into the memory a2. In addition, after writing the target data 1 into the cache and before writing the target data 1 into the memory a2, the interface card a sends a success notification to the controller a, where the success notification is used to notify the controller a that the write instruction 1 has been completed and the target data 1 has been stored. Optionally, the controller a may consider, based on the success notification, that the target data 1 has been persisted to the memory a2.

Optionally, the target data 1 may be all data in the data 1. Alternatively, optionally, the target data 1 may be a part of data in the data 1, and the interface card a may store other data (excluding the target data 1) in the data 1 in another storage manner. For example, the interface card a may synchronously write the other data into the memory a2.

That the interface card a synchronously writes the other data into the memory a2 means that the interface card a sends a success notification to the controller a only after writing the other data into the memory a2, to notify the controller a that the other data has been stored.

In this embodiment of this application, an example in which the interface card a persists the target data 1 and the other data to the memory a2 is used. Optionally, the interface card a may store, in a plurality of memories a, data to be written as instructed by the write instruction 1, for example, persist the target data 1 to the memory a2, and persist the other data to a memory a3.

In this embodiment of this application, the write instruction 1 may include one or more instructions. For example, the write instruction 1 may include a write instruction 1-1 instructing to write the target data 1 and a write instruction 1-2 instructing to write the other data.

Optionally, the interface card a may determine the target data 1 based on a data type. For example, the target data 1 may be the metadata 1, and the other data may be the service data 1. Alternatively, optionally, the interface card a may determine the target data 1 based on a data length. For example, it is assumed that a data length of the write instruction 1-1 is less than a length threshold, and a data length of the write instruction 1-2 is less than the length threshold, the interface card a may asynchronously persist, by using the cache, data to be written as instructed by the write instruction 1-1, and synchronously persist data to be written as instructed by the write instruction 1-2. Because a data length of metadata is usually small, if a length of the service data 1 is also small, the target data 1 may include both the metadata 1 and the service data 1.

Optionally, the write instruction 1 may indicate a storage manner, and the interface card a may store data in the storage manner indicated by the write instruction 1. For example, the write instruction 1-1 indicates asynchronous storage, and the write instruction 1-2 indicates synchronous storage. By using the cache of the interface card a, the interface card a may asynchronously store, in the memory a2, the data to be written as instructed by the write instruction 1-1, and synchronously store, in the memory a2, the data to be written as instructed by the write instruction 1-2.

In this embodiment of this application, the interface card a asynchronously writes the target data 1 into the memory a2 by using the cache, and that the interface card a stores the target data 1 only in the cache after extracting the target data 1 from the write instruction 1-1 is not limited. Optionally, the interface card a may store the write instruction 1-1 in the cache, and send the write instruction 1-1 in the cache to the memory a2 after sending the success notification to the controller a. The memory a2 may parse the target data 1 from the write instruction 1-1 and store the target data 1.

Similarly, the interface card a synchronously writes the other data into the memory a2, and that the interface card a sends only the other data to the memory a2 after extracting the other data from the write instruction 1-2 is not limited. Optionally, the interface card a may send the write instruction 1-2 to the memory a2, and the memory a2 may parse the other data from the write instruction 1-2 and store the other data.

Because a communication protocol (for example, a PCIe protocol) between the interface card a and the controller a is usually different from a communication protocol (for example, a SAS protocol) between the interface card a and the memory a2 or a disk enclosure a, before sending, to the memory a2, a write instruction sent by the controller a, the interface card a may convert a format of the write instruction, for example, convert a format of the write instruction 1 from a PCIe protocol format to a SAS protocol format.

Steps S4031 to S4033 shown in FIG. 4 show an example of a possible procedure in which the interface card a asynchronously writes the target data 1 into the memory a2 by using the cache. Refer to FIG. 4. Possible detailed steps of step S403 may include the following steps.

S4031: The interface card a temporarily stores the target data 1 in the partition 1.

After receiving the write instruction 1, the interface card a may write, into the partition 1, the target data 1 to be written as instructed by the write instruction 1. With reference to the foregoing descriptions, optionally, the cache of the interface card a may include the partition 1 and the partition 2. In S4031, that the interface card a writes the target data 1 into the partition 1 in the cache of the interface card a is used as an example instead of a limitation.

Optionally, the write instruction 1 may further indicate a cache address of the target data 1 in the partition 1. The cache address may be a logical address or a physical address. The interface card a may store the target data 1 in the partition 1 based on the cache address indicated by the write instruction 1.

S4032: The interface card a sends a success notification 1 to the controller a.

After the target data 1 is successfully written into the cache, the interface card a may send the success notification to the controller a, to notify the controller a that the write instruction 1 has been completed and the target data 1 has been successfully stored.

S4033: The interface card a writes the target data 1 in the partition 1 into the memory a2.

The interface card a may asynchronously write first data temporarily stored in the cache into a memory connected to the interface card a. For example, after notifying the controller a that the target data 1 has been successfully stored, the interface card a may write the target data 1 in the cache into the memory a2, to persist the target data 1. Optionally, refer to FIG. 4. The interface card a may store the target data 1 in the memory a2 through the disk enclosure a.

Optionally, after notifying the controller a that the target data 1 has been successfully stored, the interface card a may write the target data 1 into the memory a2 when a persistence condition is met. The persistence condition may be related to at least one of the following factors: a size of an available storage space of the cache, a total length of data that is in the cache and that is to be written into the memory a2, and whether the memory a2 is idle.

To improve storage efficiency of the memory a2, optionally, the interface card a may aggregately send the target data 1 in the partition 1 and the other data in the cache to the memory a2. The other data may include data to be written as instructed by another received write instruction other than the write instruction 1 in S402. A location of the other data in the cache is not limited in this embodiment of this application. For example, the other data may include data in the partition 1 and/or data in the partition 2.

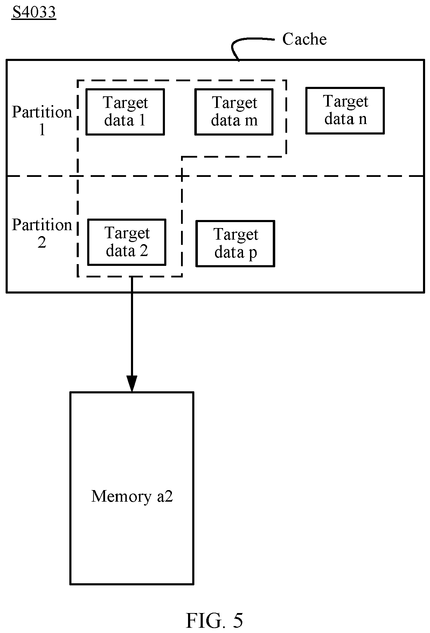

Refer to FIG. 5. It is assumed that the partition 2 of the cache of the interface card a further stores target data 2 that is written as instructed by a write instruction 2 sent by the controller b. In addition, the partition 1 further stores target data m that is written as instructed by a write instruction m and target data n that is written as instructed by a write instruction n that are sent by the controller a, and the partition 2 further stores target data p that is written as instructed by a write instruction p sent by the controller b. Herein, m, n, and p are positive integers greater than 2, and m, n, and p are not equal to each other. Optionally, the interface card a may aggregately send the target data 1 and the target data m in the partition 1 and the target data 2 in the partition 2 to the memory a2.

In an example, it is assumed that the persistence address (LBA 1) of the target data 1, a persistence address (LBA 2) of the target data 2, and a persistence address (LBA m) of the target data m all point to the memory a2. When a total length of the target data 1, the target data 2, and the target data m reaches a threshold, the interface card a may aggregately send the target data 1, the target data 2, and the target data m to the memory a2. Optionally, a persistence address of target data in the cache may be the storage address indicated by the corresponding write instruction described above.

To further improve the storage efficiency of the memory a2, optionally, the interface card a may aggregately send data adjacent to the persistence address to the memory a2. Still refer to FIG. 5. It is assumed that although a persistence address (LBA n) of the target data n and a persistence address (LBA p) of the target data p also point to the memory a2, a storage space indicated by the LBA 1 is adjacent to storage spaces indicated by the LBA 2 and the LBA m, and the storage space indicated by the LBA 1 is not adjacent to a storage space indicated by the LBA n or the LBA p. Therefore, the interface card a may not aggregately send the target data 1 and the target data n or the target data p to the memory a2.

That the interface card a aggregately sends the target data 1, the target data 2, and the target data m to the memory a2 may mean that the interface card a delivers the target data 1, the target data 2, and the target data m to the memory a2 by using one instruction. Optionally, the interface card a may deliver the target data n and the target data p to the memory a2 by using another instruction. Alternatively, that the interface card a aggregately sends the target data 1, the target data 2, and the target data m to the memory a2 may mean that the interface card a delivers the target data 1, the target data 2, and the target data m to the memory a2 by using a plurality of consecutive instructions. The plurality of instructions do not include an instruction used to store other data (for example, the target data n, the target data p, or data synchronously stored in the memory a2).

It can be learned that, that the interface card a aggregately sends the target data 1, the target data 2, and the target data m to the memory a2 may be understood as that the interface card a consecutively sends the target data 1, the target data 2, and the target data m to the memory a2. This helps the memory a2 consecutively process storage tasks of the target data 1, the target data 2, and the target data m. When the persistence addresses of the target data 1, the target data 2, and the target data m are adjacent or even consecutive, a large jump of a write address of the memory a2 can be reduced, and addressing duration can be reduced. In this way, the storage efficiency of the memory a2 is improved.

Optionally, the interface card a or the controller a may determine whether the persistence condition is met. Optionally, the write instruction 1 may further instruct to aggregately send the target data 1, the target data 2, and the target data m to the memory a2.

S404: The controller a sends a write success response 1 to the application server.

After successfully storing the data 1 through the interface card a, the controller a may send the write success response 1 to the application server, where the write success response 1 may notify that the write request 1 has been completed and the service data 1 has been stored. Optionally, after the interface card a notifies the controller a that the data 1 has been stored, the controller a may determine that the service data 1 has been successfully stored.

As mentioned in the foregoing step S403, optionally, the interface card a may asynchronously write the data 1 into the memory a2 by using the cache, and notify, after writing the data 1 into the cache and before writing the data 1 into the memory a2, the controller a that the data 1 has been stored. Correspondingly, the controller a may send the write success response 1 to the application server after the data 1 is written into the cache of the interface card a and before the data 1 is persisted to the memory a2. This helps reduce a data storage latency perceived by the application server.

As mentioned in the foregoing step S403, optionally, the interface card a may asynchronously write the target data 1 (for example, the metadata 1) into the memory a2 via the cache, and notify, after writing the target data 1 into the cache and before writing the target data 1 into the memory a2, the controller a that the target data 1 has been stored. In addition, the interface card a may synchronously write other data (for example, the service data 1) (excluding the target data 1) in the data 1 into the memory a2, and notify, after writing the other data into the memory a2, and more specifically, after successfully storing the other data in the memory a2, the controller a that the other data has been stored. Correspondingly, the controller a may send the write success response 1 to the application server after the target data 1 is written into the cache of the interface card a and after the other data is persisted to the memory a2. Compared with synchronously persisting all the data in the data 1 to the memory a2, this helps reduce the data storage latency sensed by the application server.

To avoid a case in which the data in the cache is unavailable after a cache error occurs in the interface card a, optionally, after step S402, the method in this embodiment of this application may further include S405.

S405: The interface card a synchronously backs up the target data 1 to the memory a1.

After receiving the write instruction 1, the interface card a may synchronously write the target data 1 into the memory a1. In other words, after writing the target data 1 into both the cache and the memory a1 and before writing the target data 1 into the memory a2, the interface card a performs step S4032. The data written into the cache is backed up to the memory a1 connected to the interface card a. In this way, even if the cache is abnormal, for example, data that is in the cache and that is not persisted is lost, the interface card a can still find, in the memory a1, the data in the cache. This helps improve availability of the data in the cache and improve reliability of a data service provided by the storage system.

Optionally, a memory access latency of the memory a1 may be less than a memory access latency of the memory a2. For example, the memory a1 may be an SSD, and the memory a2 may be an HDD. In FIG. 4, only an example in which the memory a1 and the memory a2 are connected to the interface card a through the disk enclosure is used. Optionally, the memory a1 and/or the memory a2 may be directly connected to the interface card a.

To avoid a case in which the data in the cache is unavailable after a cache error occurs in the interface card a, optionally, after step S401, the method in this embodiment of this application may further include S406 and S407.

S406: The controller a stores the target data 1 in a memory c1.

S407: When the cache is abnormal, the controller a forwards the target data 1 to the memory a2 through the interface card a.

Optionally, the storage system further includes the memory c1 connected to the controller a. After receiving the write request, the controller a is further configured to write the target data 1 into the memory c1. Optionally, the controller a determines that the target data 1 is successfully stored only after the target data 1 is written into both the cache of the interface card a and the memory c1.

After the cache is abnormal, the controller a may forward, through the interface card a, data (including the target data 1) in the memory c1 to a memory under the interface card a, for example, the memory a2 or another memory. In this way, even if the cache is abnormal, for example, the data that is in the cache and that is not persisted is lost, the interface card a can still find, in the at least one memory, the data in the cache. This helps improve the availability of the data in the cache and improve the reliability of the data service provided by the storage system.

The following describes a process in which the controller b provides the data storage service through the interface card a.

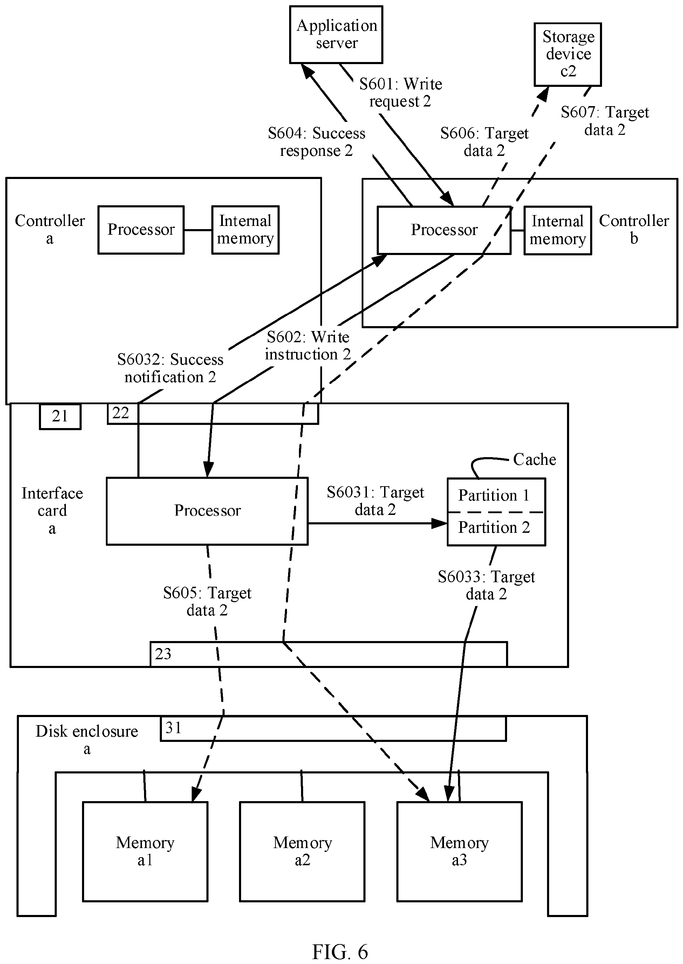

FIG. 6 shows an example of a method procedure in which a controller b stores data through an interface card a. A structure other than an application server in FIG. 6 may be, for example, the storage node shown in FIG. 3-2. To simplify the accompanying drawing, FIG. 6 does not specifically show an interface card b and a memory under the interface card b, and does not show PCIe riser devices in a controller a and the controller b. Another possible embodiment of a data processing method provided in this application may include the following steps S601 to S604.

S601: The application server sends a write request 2 to the controller b.

Step S601 may be understood with reference to the foregoing step S401. For example, the write request 2 may be understood with reference to the related descriptions of the write request 1.

In this embodiment of this application, that the write request 1 and the write request 2 are from a same device is not limited. For example, the write request 1 and the write request 2 may be from different application servers, or one is from the application server, and the other is from a software system.

In this embodiment of this application, that service data 1 corresponding to the write request 1 and service data 2 corresponding to the write request 2 are data of a same type is not limited. For example, the service data 1 may be user data, and the service data 2 may be system data.

S602: The controller b sends a write instruction 2 to the interface card a.

The controller b may send the write instruction 2 to the interface card a based on the write request 2, where the write instruction 2 instructs to store data 2. Step S602 may be understood with reference to step S402. For example, the write instruction 2 may be understood with reference to the related descriptions of the write instruction 1, and the data 2 may be understood with reference to the foregoing data 1.

Different from S402, with reference to the connection manner shown in FIG. 3-2, because the interface card a is inserted into the controller a, a line through which the controller b sends the write instruction 2 to the interface card a is different from the line through which the controller a sends the write instruction 1 to the interface card a.

S603: The interface card a stores, by using a cache and a memory a3, the data 2 to be written as instructed by the write instruction 2.

After receiving the write instruction 2, the interface card a may store the data 2 by using the cache and the memory a3. In this embodiment of this application, that the memory a3 is different from a memory a2 is used as an example instead of a limitation. Optionally, the interface card a may store the data 2 by using the cache and the memory a2.

Step S603 may be understood with reference to step S403. For example, after receiving the write instruction 2, the interface card b may asynchronously write target data 2 in the data 2 into the memory a3 by using the cache. Optionally, the target data 2 may be all data in the data 2. Alternatively, optionally, the target data 2 may be a part of data in the data 2, and the interface card b may store other data (excluding the target data 2) in the data 2 in another storage manner. For example, the interface card b may synchronously write the other data into the memory a3. The write instruction 2 may include one or more instructions. For example, the write instruction 2 may include a write instruction 2-1 instructing to write the target data 2 and a write instruction 2-2 instructing to write the other data.

Similar to step S403, with reference to FIG. 6, possible detailed steps of step S603 may include the following steps.

S6031: The interface card a temporarily stores the target data 2 in a partition 2.

S6032: The interface card a sends a success notification 2 to the controller b.

S6033: The interface card a writes the target data 2 in the partition 2 into the memory a3.

The partition 2 may be understood with reference to the partition 2 mentioned in step S403, and S6031 to S6033 may be respectively understood with reference to S4031 to S4033.

S604: The controller b sends a write success response 2 to the application server.

After successfully storing the data 2 through the interface card a, the controller b may send a write success response to the application server, to complete a data storage service. Optionally, after the interface card a notifies the controller b that the data 2 has been stored, the controller b may determine that the data 2 has been successfully stored.

As mentioned in the foregoing step S603, optionally, the interface card a may asynchronously write the data 2 into the memory a3 by using the cache, and notify, after writing the data 2 into the cache and before writing the data 2 into the memory a3, the controller b that the data 2 has been stored. Correspondingly, the controller b may send the write success response 2 to the application server after the data 2 is written into the cache of the interface card a and before the data 2 is persisted to the memory a3. This helps reduce a data storage latency sensed by the application server.

As mentioned in the foregoing step S603, optionally, the interface card a may asynchronously write the target data 2 (for example, metadata 2) into the memory a3 by using the cache, and notify, after writing the target data 2 into the cache and before writing the target data 2 into the memory a3, the controller b that the target data 2 has been stored. In addition, the interface card a may synchronously write other data (for example, the service data 2) (excluding the target data 2) in the data 2 into the memory a3, and notify, after writing the other data into the memory a3, and more specifically, after successfully storing the other data in the memory a3, the controller b that the other data has been stored. Correspondingly, the controller b may send the write success response 2 to the application server after the target data 2 is written into the cache of the interface card a and after the other data is persisted to the memory a3. Compared with synchronously persisting all data in the data 2 to the memory a3, this helps reduce the data storage latency sensed by the application server.

To avoid a case in which data in the cache is unavailable after a cache error occurs in the interface card a, optionally, after step S602, the method in this embodiment of this application may further include S605.

S605: The interface card a synchronously writes the target data 2 into a memory a1.

For step S605, refer to step S405. Details are not described herein again. For example, optionally, a memory access latency of the memory a1 may be less than a memory access latency of the memory a2. For example, the memory a1 may be an SSD, and the memory a2 may be an HDD. In FIG. 6, only an example in which the memory a1 and the memory a2 are connected to the interface card a through a disk enclosure is used. Optionally, the memory a1 and/or the memory a2 may be directly connected to the interface card a.

To avoid a case in which the data in the cache is unavailable after a cache error occurs in the interface card a, optionally, after step S601, the method in this embodiment of this application may further include S606 and S607.

S606: The controller b stores the target data 2 in a memory c.

S607: When the cache is abnormal, the controller b forwards the target data 2 to the memory a3 through the interface card a.

Optionally, the storage system further includes a memory c2 connected to the controller b. After receiving the write request, the controller b is further configured to write the target data 2 into the memory c2. After the cache is abnormal, the controller b may forward, through the interface card a, data (including the target data 2) in the memory c2 to a memory under the interface card a, for example, the memory a3 or another memory. In this way, even if the cache is abnormal, for example, the data that is in the cache and that is not persisted is lost, the interface card a can still find, in at least one memory, the data in the cache. This helps improve availability of the data in the cache and improve reliability of a data service provided by the storage system.

The controller b may provide a data storage service through the interface card b. Refer to FIG. 3-2. Because the interface card b is inserted into the controller b, for a process in which the controller b provides the data storage service through the interface card b, refer to the embodiment corresponding to FIG. 4. Specifically, for steps performed by the controller b, refer to the steps performed by the controller a in the embodiment corresponding to FIG. 4, and for steps performed by the interface card b, refer to the steps performed by the interface card a in the embodiment corresponding to FIG. 4.

The controller a may provide a data storage service through the interface card b. Refer to FIG. 3-2. Because the interface card b is inserted into the controller b, for a process in which the controller a provides the data storage service through the interface card b, refer to the embodiment corresponding to FIG. 6. Specifically, for steps performed by the controller a, refer to the steps performed by the controller b in the embodiment corresponding to FIG. 6, and for steps performed by the interface card b, refer to the steps performed by the interface card a in the embodiment corresponding to FIG. 6.

The following describes a process in which the controller a provides a data query service through the interface card a.

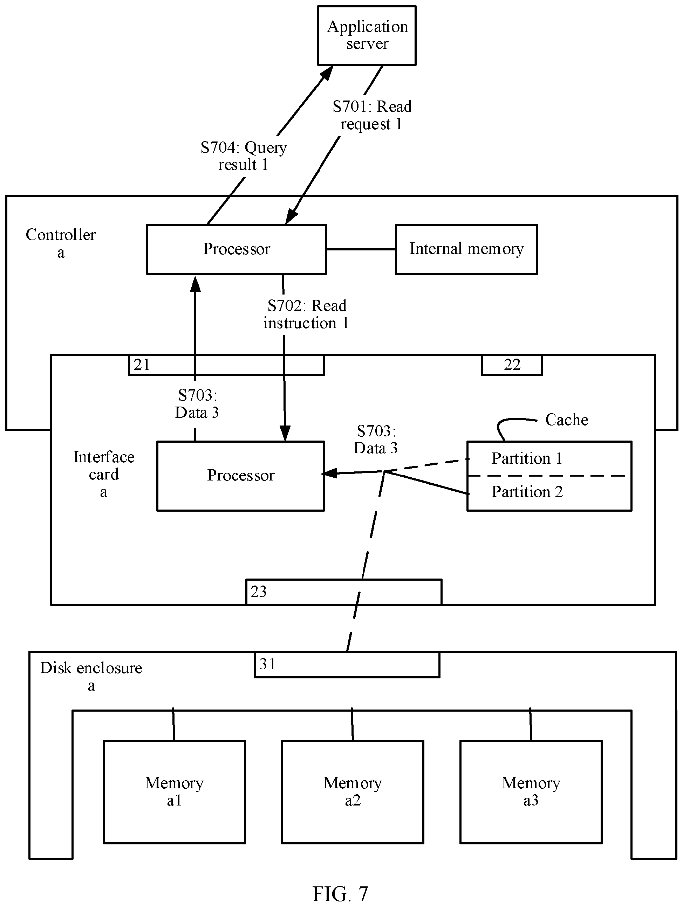

FIG. 7 shows an example of a method procedure in which a controller a queries for data through an interface card a. A structure other than an application server in FIG. 7 may be, for example, the storage node shown in FIG. 3-2. To simplify the accompanying drawing, FIG. 7 does not specifically show a controller b, an interface card b, and a memory under the interface card b, and does not show a PCIe riser device in the controller a. Another possible embodiment of a data processing method provided in this application may include the following steps S701 to S704.

S701: The application server sends a read request 1 to the controller a.

The application server may send the data read request 1 (the read request 1 for short) to the controller a, where the read request 1 is used to request to read service data 3. The service data 3 may be the service data 1 described in S401 or the service data 2 described in S601. In this embodiment of this application, that the read request 1 is sent by the application server is used as an example instead of a limitation. For another possible source of the read request 1, refer to the related content in S401.

S702: The controller a sends a read instruction 1 to the interface card a.

After receiving the read request 1, the controller a may send the read instruction 1 to the interface card a, where the read instruction 1 instructs to query for data 3. The data 3 may be the service data 2, or may include the service data 2 and data other than the service data 2.

S703: The interface card a queries, in a cache and a connected memory, for the data 3 to be read as instructed by the read instruction 1, and provides the data 3 to the controller a.

After receiving the read instruction 1, the interface card a may query for the data 3. A query range may include the cache of the interface card a and the memory (for example, a memory a1, a memory a2, and a memory a3) connected to the interface card a.

A query manner of the interface card a within the query range is not limited in this embodiment of this application. Optionally, the interface card a may traverse the cache, the memory a1, the memory a2, and the memory a3 to query for the data 3. Then, the interface card a may return one or more queried results to the controller a. Alternatively, optionally, the interface card a may sequentially access the cache and the connected memory in a specific sequence, and once the data 3 is found, the interface card a stops searching for the data 3. For example, the interface card a may first search for the data 3 in the cache. If the data 3 is found, the interface card a returns the data 3 to the controller a; or if the data 3 is not found, the interface card a continues to search for the data 3 in the memory a1. If the interface card a finds the data 3 in the memory a1, the interface card a returns the data 3 to the controller a; or if the interface card a does not find the data 3 in the memory a1, the interface card a continues to search for target data 3 in the memory a2. By analogy, the controller a may return first found data 3 to the controller a, and stops searching for the data 3. If the controller a does not find the data 3 in all search ranges, the controller a may notify a controller that the query fails.

In this embodiment of this application, the data 3 may include the target data 3, and the target data 3 may be all or a part of first target data. The first target data may be the target data 1 mentioned in S403 or the target data 2 mentioned in S603. Because the interface card a temporarily stores the first target data by using the cache, if the interface card a receives the read instruction 1 before the first target data is persisted, the interface card a may obtain all or a part of the target data 3 from the cache according to the read instruction 1.

Refer to the content in S403. The cache of the interface card a may be divided into a partition 1 and a partition 2 shown in FIG. 7. The partition 1 may be used to store data for the controller a, and the partition 2 may be used to store data for the controller b. A query range in which the interface card a queries for the target data 3 in the cache may include the partition 1 and the partition 2. If the target data 3 is all or a part of the target data 1, the interface card a may obtain all or the part of the target data 3 from the partition 1; or if the target data 3 is all or a part of the target data 2, the interface card a may obtain all or the part of the target data 3 from the partition 2. In FIG. 7, a solid line with an arrow between a processor and the partition 2 may indicate that the processor finds the target data 3 in the partition 2, and a dashed line with an arrow between the processor and the partition 1 or a disk enclosure a may indicate that a range in which the processor searches for the target data 3 includes the partition 1 and the disk enclosure a.

If the interface card a receives the read instruction 1 after the first target data is persisted, the interface card a may obtain all or the part of the target data 3 from the connected memory (for example, the memory a1, the memory a2, or the memory a3) according to the read instruction 1.

Refer to step S405 or S605. It is assumed that the interface card a synchronously backs up the first target data to the memory a1. In this way, if the target data 3 in the cache is not persisted or is not fully persisted and the cache is abnormal, the interface card a may obtain all or the part of the target data 3 from the memory a1. This helps improve availability of data in the cache.

Refer to steps S406 and S407, or refer to steps S606 and S607. It is assumed that the controller a backs up the target data 1 to a memory c 1 or the controller b backs up the target data 2 to a memory c2, and after the cache is abnormal, the controller a transfers backup data to the memory a2, or the controller b transfers backup data to the memory a3. In this way, if the target data 3 in the cache is not persisted or is not fully persisted and the cache is abnormal, the interface card a may obtain all or the part of the target data 3 from the memory a2 or the memory a3. This helps improve the availability of data in the cache.

Optionally, the read instruction 1 may indicate the search range of the data 3, for example, instruct to query for the data 3 in the cache of the interface card a and a memory under the disk enclosure a. In this embodiment of this application, a manner in which the interface card a queries for other data (excluding the target data 3) in the data 3 is not limited. Optionally, the interface card a may also query for the other data in the cache and the connected memory, or may query for the other data only in the connected memory. After finding the other data, the interface card a may return the other data to the controller a. If the other data is not found, the controller a may notify the controller that the query fails.

In this embodiment of this application, the read instruction 1 may include one or more instructions. For example, the read instruction 1 may include a read instruction 1-1 instructing to query for the target data 3 and a read instruction 1-2 instructing to query for the data other than the target data 3. The read instruction 1-1 may instruct to query for the target data 3 in the cache of the interface card a and in the memory under the interface card a, and the read instruction 1-2 instructs to query for the other data in the memory under the interface card a.

For example, the target data 3 is metadata 3 that describes the service data 3. It is assumed that the metadata 3 describes a storage location of the service data 3 in the memory a3. After obtaining the metadata 3 from the cache, the interface card a may obtain the service data 3 from the memory a3 based on the metadata 3.

S704: The controller a sends a query result 1 to the application server.

If the controller a receives the data 3 returned by the interface card a, the controller a may obtain the service data 3 from the data 3, and send, to the application server, a query result 1 that carries the service data 3.

If the controller a does not receive, within specific duration, the data 3 returned by the interface card a, or the interface card a feeds back a query failure, the controller a may send, to the application server, a query result 1 that does not carry the service data 3, where the query result indicates that the service data 3 cannot be found.

Refer to FIG. 7. It is assumed that the target data 3 is stored in the partition 2. It may be understood that the target data 3 is data stored by the interface card a for the controller b. In this way, even if the controller b is faulty, the interface card a may query, for the controller a, for the data of the controller b in the partition 2, and the controller a sends the data to the application server. This helps ensure availability of the data of the controller b in the cache of the interface card a, and therefore helps improve reliability of a storage system.

The following describes a process in which the controller b provides a data query service through the interface card a.

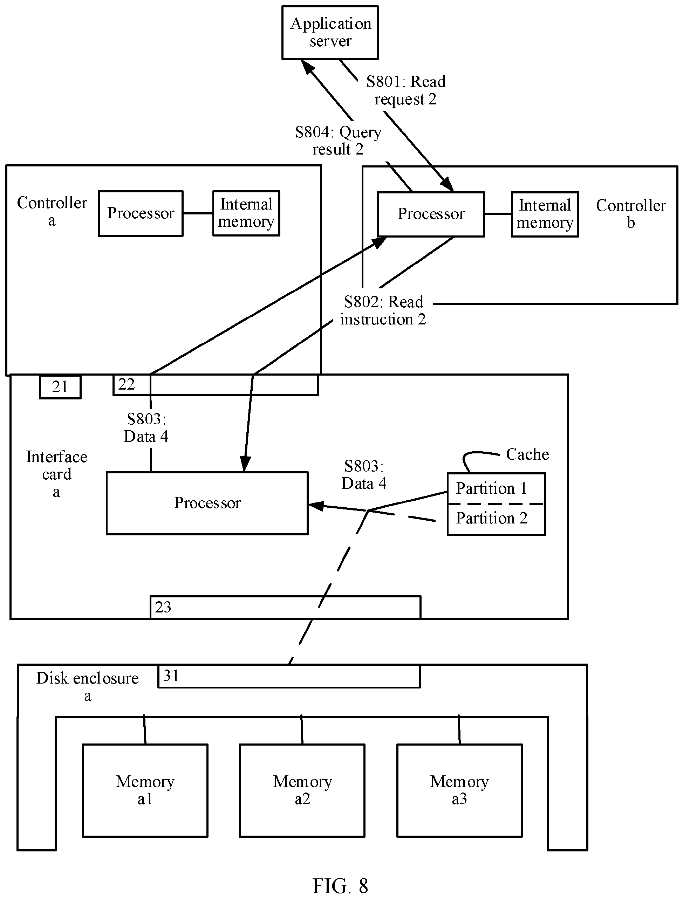

FIG. 8 shows an example of a method procedure in which a controller b queries for data through an interface card a. A structure other than an application server in FIG. 8 may be, for example, the storage node shown in FIG. 3-2. To simplify the accompanying drawing, FIG. 8 does not specifically show an interface card b and a memory under the interface card b, and does not show PCIe riser devices in a controller a and the controller b. Another possible embodiment of a data processing method provided in this application may include the following steps S801 to S804.

S801: The application server sends a read request 2 to the controller b.

Step S801 may be understood with reference to the foregoing step S701. For example, the read request 2 may be understood with reference to the related descriptions of the read request 1.

In this embodiment of this application, that the read request 1 and the read request 2 are from a same device is not limited. For example, the read request 1 and the read request 2 may be from different application servers, or one is from the application server, and the other is from a software system.

S802: The controller b sends a read instruction 2 to the interface card a.

After receiving the read request 2, the controller b may send the read instruction 2 to the interface card a, where the read instruction 2 instructs to query for data 4.

Step S802 may be understood with reference to step S702. Different from S702, with reference to the connection manner shown in FIG. 3-2, because the interface card a is inserted into the controller a, a line through which the controller b sends the read instruction 2 to the interface card a is different from the line through which the controller a sends the read instruction 1 to the interface card a.

S803: The interface card a queries, in a cache and a connected memory, for the data 4 to be read as instructed by the read instruction 2, and provides the data 4 to the controller b.

After receiving the read instruction 2, the interface card a may query, in the cache and a memory (for example, a memory a1, a memory a2, and a memory a3) connected to the interface card a, for the data 4 to be read as instructed by the read instruction 2.

Step S803 may be understood with reference to step S703.

For example, the data 4 may include target data 4, and the target data 4 may be all or a part of first target data. The first target data may be the target data 1 mentioned in S403 or the target data 2 mentioned in S603. Because the interface card a temporarily stores the first target data by using the cache, if the interface card a receives the read instruction 2 before the first target data is persisted, the interface card a may obtain all or a part of the target data 4 from the cache according to the read instruction 2.

For example, the read instruction 2 may include one or more instructions. For example, the read instruction 2 may include a read instruction 2-1 instructing to query for the target data 4 and a read instruction 2-2 instructing to query for data other than the target data 4. The read instruction 2-1 may instruct to query for the target data 4 in the cache of the interface card a and in the memory under the interface card a, and the read instruction 2-2 instructs to query for the other data in the memory under the interface card a.

For example, if the interface card a receives the read instruction 2 after the first target data is persisted, the interface card a may obtain all or the part of the target data 4 from the connected memory (for example, the memory a1, the memory a2, or the memory a3) according to the read instruction 2.

For example, refer to step S405 or S605. It is assumed that the interface card a synchronously backs up the first target data to the memory a1. In this way, if the target data 4 in the cache is not persisted or is not fully persisted and the cache is abnormal, the interface card a may obtain all or the part of the target data 4 from the memory a1. This helps improve availability of data in the cache.

For example, refer to steps S406 and S407, or refer to steps S606 and S607. It is assumed that the controller a backs up the target data 1 to a memory c1 or the controller b backs up the target data 2 to a memory c2, and after the cache is abnormal, the controller a transfers backup data to the memory a2, or the controller b transfers backup data to the memory a3. In this way, if the target data 4 in the cache is not persisted or is not fully persisted and the cache is abnormal, the interface card a may obtain all or the part of the target data 4 from the memory a2 or the memory a3. This helps improve the availability of data in the cache.

S804: The controller b sends a query result 2 to the application server.

If the controller b receives the data 4 returned by the interface card a, the controller b may obtain the service data 4 from the data 4, and send, to the application server, a query result that carries the service data 4.

If the controller b does not receive, within specific duration, the data 4 returned by the interface card a, or the interface card a feeds back a query failure, the controller b may send, to the application server, a query result that does not carry the service data 4, where the query result indicates that the service data 4 cannot be found.

Refer to FIG. 8. It is assumed that the target data 4 is stored in a partition 1. It may be understood that the target data 4 is data stored by the interface card a for the controller a. In this way, even if the controller a is faulty, the interface card a may query, for the controller b, for the data of the controller a in the partition 1, and the controller b sends the data to the application server. This helps ensure availability of the data of the controller a in the cache of the interface card a, and therefore helps improve reliability of a storage system.

The controller b may provide a data query service through the interface card b. Refer to FIG. 3-2. Because the interface card b is inserted into the controller b, for a process in which the controller b provides the data query service through the interface card b, refer to the embodiment corresponding to FIG. 7. Specifically, for steps performed by the controller b, refer to the steps performed by the controller a in the embodiment corresponding to FIG. 7, and for steps performed by the interface card b, refer to the steps performed by the interface card a in the embodiment corresponding to FIG. 7.

The controller a may provide a data query service through the interface card b. Referto FIG. 3-2. Because the interface card b is inserted into the controller b, for a process in which the controller a provides the data storage service through the interface card b, refer to the embodiment corresponding to FIG. 8. Specifically, for steps performed by the controller a, refer to the steps performed by the controller b in the embodiment corresponding to FIG. 8, and for steps performed by the interface card b, refer to the steps performed by the interface card a in the embodiment corresponding to FIG. 8.

For a data storage service and a data query service provided by each controller in the storage node corresponding to FIG. 3-3, refer to corresponding services provided by a corresponding controller in the storage node corresponding to FIG. 3-2 described above respectively. For example, by replacing the interface card a in the embodiment corresponding to FIG. 4 with a disk enclosure a, a process in which the controller a shown in FIG. 3-3 provides the data storage service through the disk enclosure a may be determined.

The foregoing describes in detail the storage system and the data processing method related to the storage system provided in embodiments of this application. To better implement the foregoing solutions in embodiments of this application, correspondingly, the following further provides a related device configured to cooperate in implementing the foregoing solutions.

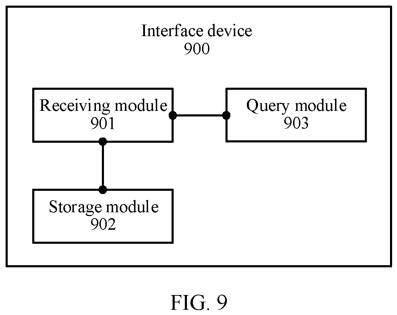

FIG. 9 is a schematic diagram of a structure of a shared interface device according to an embodiment of this application. The shared interface device may be the shared interface device a or the shared interface device b in the method embodiment in FIG. 3-1, or may be the interface card a or the interface card b in the method embodiment in FIG. 3-2 or FIG. 3-3, and may perform the method and steps that are performed by the corresponding shared interface device in the method in the corresponding embodiment. A first controller and a second controller separately communicate with at least one memory via the shared interface device. As shown in FIG. 9, a shared interface device 900 includes a receiving module 901, a storage module 902, and a query module 903.

The receiving module 901 is configured to receive a write instruction sent by the first controller. For a specific implementation, refer to the related descriptions of step S402 in FIG. 4, or refer to the related descriptions of step S602 in FIG. 6. Details are not described herein again.

The storage module 902 is configured to temporarily store, in a cache of the storage module 902, first data to be written as instructed by the write instruction, and is further configured to asynchronously write the first data temporarily stored in the cache into a first memory in the at least one memory. For a specific implementation, refer to the related descriptions of step S403. For example, for details, refer to the related descriptions of step S4031 or steps S4031 to S4033, or refer to the related descriptions of step S603. For example, for details, refer to the related descriptions of step S6031 or steps S6031 to S6033. Details are not described herein again.

The receiving module 901 is further configured to receive a read instruction sent by the second controller after the first controller is faulty, where the read instruction instructs to query for second data, and the second data is all or a part of the first data. For a specific implementation, refer to the related descriptions of step S702 in FIG. 7, or refer to the related descriptions of step S802 in FIG. 8. Details are not described herein again.

The query module 903 is configured to obtain, according to the read instruction, all or a part of the second data from the cache, and provide all or the part of the second data to the second controller. For a specific implementation, refer to the related descriptions of step S703 in FIG. 7, or refer to the related descriptions of step S803 in FIG. 8. Details are not described herein again.

Optionally, the cache includes a first partition and a second partition. The first partition is used to temporarily store data for the first controller, but is not used to temporarily store data for the second controller. The second partition is used to temporarily store data for the second controller, but is not used to temporarily store data for the first controller. A query range in which the query module 903 obtains all or the part of the second data in the cache includes the first partition and the second partition.

Optionally, the write instruction instructs to write the first data into the first memory, and the storage module 902 is specifically configured to temporarily store the first data in the first partition. The storage module 902 is further configured to consecutively send the first data temporarily stored in the first partition and the second data temporarily stored in the second partition to the first memory, where the first data includes data written into the first memory as instructed by the first controller, and the second data includes data written into the first memory as instructed by the second controller.

Optionally, the at least one memory further includes a second memory, where a memory access latency of the second memory is less than that of the first memory. The storage module 902 is further configured to synchronously back up the first data to the second memory after receiving the write instruction, obtain, according to the read instruction, all or the part of the second data from the second memory when the cache is abnormal, and provide all or the part of the second data to the second controller.

Optionally, the storage system further includes a third memory connected to the first controller. The query module 903 is further configured to obtain, according to the read instruction, all or the part of the second data from a connected fourth memory after the receiving module 901 receives the read instruction and when the cache is abnormal, and provide all or the part of the second data to the second controller. All or the part of the second data in the fourth memory is forwarded by the first controller from the third memory to the fourth memory via the shared interface device after the cache is abnormal, and data in the third memory includes the first data backed up by the first controller.

Optionally, the data includes service data and/or metadata of the service data, and the service data is data to be written as requested by a data write request received by the first controller.

Optionally, the shared interface device is an interface card or a disk enclosure, the interface card is inserted into the first controller or the second controller, and the disk enclosure is configured to install the at least one memory.

Optionally, the shared interface device communicates with the first controller and/or the second controller by using a peripheral component interconnect express PCIe protocol.

An embodiment of this application further provides a computing device. A first controller and a second controller separately communicate with at least one memory via the computing device. The computing device includes a memory and a processor. The memory includes a cache. The processor executes computer instructions stored in the memory, to enable the computing device to perform the method performed by the shared interface device a or the shared interface device b described above. Optionally, the computing device may be, for example, the interface card a or the interface card b shown in FIG. 3-2, or may be, for example, the disk enclosure a or the disk enclosure b shown in FIG. 3-3.

This application further provides a computer-readable storage medium. The computer-readable storage medium stores a computer program. When the computer program is executed by a processor, some or all steps recorded in any one of the foregoing method embodiments may be implemented.

An embodiment of the present invention further provides a computer program. The computer program includes instructions, and when the computer program is executed by a computer, the computer may perform some or all steps of any method for provisioning a region resource.

In the foregoing embodiments, the descriptions of each embodiment have a respective focus. For a part that is not described in detail in an embodiment, refer to related descriptions in other embodiments.

A person of ordinary skill in the art may understand that the foregoing computer-readable storage medium includes any non-transitory (non-transitory) machine-readable medium that can store program code, for example, a USB flash drive, a removable hard disk drive, a magnetic disk, an optical disc, a RAM, an SSD, or a non-volatile memory (non-volatile memory).

It should be noted that, for brief description, the foregoing method embodiments are represented as a series of action combinations. However, a person skilled in the art should understand that this application is not limited to the described action sequence, because some steps may be performed in other sequences or simultaneously according to this application. It should be further appreciated by a person skilled in the art that embodiments described in this specification all belong to example embodiments, and the involved actions and modules are not necessarily required by this application. "A and/or B" in embodiments of this application may be understood as two solutions: "A and B" and "A or B".

In the specification, claims, and accompanying drawings of this application, the terms "first", "second", "third", "fourth", and so on are intended to distinguish between similar objects but do not necessarily indicate a specific order or sequence. It should be understood that the terms used in such a way are interchangeable in appropriate cases, and this is merely a discrimination manner for describing objects having a same attribute in embodiments of this application.

In the several embodiments provided in this application, it should be understood that the disclosed apparatus may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual coupling or direct coupling or communication connection may be implemented through some interfaces. The indirect coupling or communication connection between the apparatuses or units may be implemented in electronic or other forms.

The units described as separate parts may or may not be physically separate, and parts displayed as units may be or may not be physical units, may be located in one location, or may be distributed on a plurality of network units. Some or all of the units may be selected based on actual requirements to achieve the objectives of the solutions of embodiments.

In addition, function units in embodiments of this application may be integrated into one processing unit, or each of the units may exist alone physically, or two or more units are integrated into one unit. The integrated unit may be implemented in a form of hardware, or may be implemented in a form of a software functional unit.

Finally, it should be noted that the foregoing embodiments are merely intended for describing the technical solutions of this application, rather than limiting the present invention.

## Claims

1. A storage system, wherein the storage system comprises a first controller and a second controller, and the first controller and the second controller separately communicate with at least one memory via a shared interface device on which a cache is disposed;
the first controller is configured to send, to the shared interface device, a write instruction instructing to write first data;
the shared interface device is configured to temporarily store the first data in the cache, and is further configured to asynchronously write the first data temporarily stored in the cache into a first memory in the at least one memory;
the second controller is configured to send a read instruction to the shared interface device after the first controller is faulty, wherein the read instruction instructs to query for second data, and the second data is all or a part of the first data; and
the shared interface device is further configured to obtain, according to the read instruction, all or a part of the second data from the cache, and provide all or the part of the second data to the second controller.

2. The storage system according to claim 1, wherein
the second controller is further configured to send, to the shared interface device, a write instruction instructing to write third data; and
the shared interface device is further configured to temporarily store the third data in the cache, and is further configured to asynchronously write the third data temporarily stored in the cache into the first memory.

3. The storage system according to claim 2, wherein the cache comprises a first partition and a second partition, the first partition is used to temporarily store data for the first controller, the second partition is used to temporarily store data for the second controller, and a query range in which the shared interface device obtains all or the part of the second data in the cache comprises the first partition and the second partition.

4. The storage system according to claim 3, wherein the shared interface device is specifically configured to:
temporarily store the first data in the first partition, and temporarily store the third data in the second partition; and
consecutively send the first data temporarily stored in the first partition and the third data temporarily stored in the second partition to the first memory.

5. The storage system according to any one of claims 1 to 4, wherein the at least one memory further comprises a second memory, a memory access latency of the second memory is less than that of the first memory, and the shared interface device is further configured to:
synchronously back up the first data to the second memory after receiving the write instruction; and
obtain, according to the read instruction, all or the part of the second data from the second memory when the cache is abnormal, and provide all or the part of the second data to the second controller.

6. The storage system according to any one of claims 1 to 5, wherein the storage system further comprises a third memory connected to the first controller, and the first controller is further configured to:
back up the first data to the third memory; and
forward, via the shared interface device, data backed up in the third memory to a fourth memory in the at least one memory when the cache is abnormal; and
the shared interface device is further configured to:
obtain, according to the read instruction, all or the part of the second data from the fourth memory when the cache is abnormal, and provide all or the part of the second data to the second controller.

7. The storage system according to any one of claims 1 to 6, wherein the data comprises service data and/or metadata of the service data, and the service data is data to be written as requested by a data write request received by the first controller.

8. The storage system according to any one of claims 1 to 7, wherein the shared interface device is an interface card or a disk enclosure, the interface card is inserted into the first controller or the second controller, and the disk enclosure is configured to install the at least one memory.

9. The storage system according to any one of claims 1 to 8, wherein the shared interface device communicates with the first controller and/or the second controller by using a peripheral component interconnect express PCIe protocol.

10. The storage system according to any one of claims 1 to 9, wherein each of the at least one memory has only a single port for communication with the shared interface device.

11. A storage system, wherein the storage system comprises a first controller and a second controller, and the first controller and the second controller separately communicate with at least one memory via a shared interface device on which a cache is disposed;
the first controller is configured to send, to the shared interface device, a write instruction instructing to write first data;
the second controller is configured to send, to the shared interface device, a write instruction instructing to write third data; and
the shared interface device is further configured to temporarily store the first data and the third data in the cache, and is further configured to asynchronously write the first data and the third data that are temporarily stored in the cache into a first memory in the at least one memory.

12. A data processing method, wherein a storage system comprises a first controller and a second controller, the first controller and the second controller separately communicate with at least one memory via a shared interface device on which a cache is disposed, and the method comprises:
sending, by the first controller to the shared interface device, a write instruction instructing to write first data;
temporarily storing, by the shared interface device, the first data in the cache, and asynchronously writing the first data temporarily stored in the cache into a first memory in the at least one memory;
sending, by the second controller, a read instruction to the shared interface device after the first controller is faulty, wherein the read instruction instructs to query for second data, and the second data is all or a part of the first data; and
obtaining, by the shared interface device according to the read instruction, all or a part of the second data from the cache, and providing all or the part of the second data to the second controller.

13. The method according to claim 12, wherein the method further comprises:
sending, by the second controller to the shared interface device, a write instruction instructing to write third data; and
temporarily storing, by the shared interface device, the third data in the cache, and asynchronously writing the third data temporarily stored in the cache into the first memory.

14. The method according to claim 13, wherein the cache comprises a first partition and a second partition, the first partition is used to temporarily store data for the first controller, the second partition is used to temporarily store data for the second controller, and a query range in which the shared interface device obtains all or the part of the second data in the cache comprises the first partition and the second partition.

15. The method according to claim 14, wherein the temporarily storing, by the shared interface device, the first data and the third data in the cache comprises:
temporarily storing, by the shared interface device, the first data in the first partition, and temporarily storing the third data in the second partition; and
the asynchronously writing, by the shared interface device, the first data and the third data that are temporarily stored in the cache into the first memory comprises:
consecutively sending, by the shared interface device, the first data temporarily stored in the first partition and the third data temporarily stored in the second partition to the first memory.

16. The method according to any one of claims 12 to 15, wherein the at least one memory further comprises a second memory, a memory access latency of the second memory is less than that of the first memory, and the method further comprises:
synchronously backing up, by the shared interface device, the first data to the second memory after receiving the write instruction; and
obtaining, by the shared interface device according to the read instruction, all or the part of the second data from the second memory when the cache is abnormal, and providing all or the part of the second data to the second controller.

17. The method according to any one of claims 12 to 16, wherein the storage system further comprises a third memory connected to the first controller, and the method further comprises:
backing up, by the first controller, the first data to the third memory;
forwarding, by the first controller via the shared interface device when the cache is abnormal, data backed up in the third memory to a fourth memory in the at least one memory; and
obtaining, by the shared interface device according to the read instruction, all or the part of the second data from the fourth memory after the shared interface device receives the read instruction and when the cache is abnormal, and providing all or the part of the second data to the second controller.

18. The method according to any one of claims 12 to 17, wherein the data comprises service data and/or metadata of the service data, and the service data is data to be written as requested by a data write request received by the first controller.

19. The method according to any one of claims 12 to 18, wherein the shared interface device is an interface card or a disk enclosure, the interface card is inserted into the first controller or the second controller, and the disk enclosure is configured to install the at least one memory.

20. The method according to any one of claims 12 to 19, wherein the shared interface device communicates with the first controller and/or the second controller by using a peripheral component interconnect express PCIe protocol.

21. The method according to any one of claims 12 to 20, wherein each of the at least one memory has only a single port for communication with the shared interface device.

22. A data processing method, wherein a storage system comprises a first controller and a second controller, the first controller and the second controller separately communicate with at least one memory via a shared interface device on which a cache is disposed, and the method comprises:
sending, by the first controller to the shared interface device, a write instruction instructing to write first data;
sending, by the second controller to the shared interface device, a write instruction instructing to write third data; and
temporarily storing, by the shared interface device, the first data and the third data in the cache, and asynchronously writing the first data and the third data that are temporarily stored in the cache into a first memory in the at least one memory.

23. A data processing method, wherein a storage system comprises a first controller and a second controller, the first controller and the second controller separately communicate with at least one memory via a shared interface device on which a cache is disposed, and the method comprises:
receiving, by the shared interface device, a write instruction that is sent by the first controller and that instructs to write first data;
temporarily storing, by the shared interface device, the first data in the cache, and asynchronously writing the first data temporarily stored in the cache into a first memory in the at least one memory;
receiving, by the shared interface device, a read instruction sent by the second controller after the first controller is faulty, wherein the read instruction instructs to query for second data, and the second data is all or a part of the first data; and
obtaining, by the shared interface device according to the read instruction, all or a part of the second data from the cache, and providing all or the part of the second data to the second controller.

24. A shared interface device, comprising a receiving module, a storage module, and a query module, wherein
the receiving module is configured to receive a write instruction that is sent by a first controller and that instructs to write first data, and the first controller and a second controller separately communicate with at least one memory via the shared interface device;
the storage module is configured to temporarily store the first data in a cache of the storage module, and asynchronously write the first data temporarily stored in the cache to a first memory in the at least one memory;
the receiving module is further configured to receive a read instruction sent by the second controller after the first controller is faulty, wherein the read instruction instructs to query for second data, and the second data is all or a part of the first data; and
the query module is configured to obtain, according to the read instruction, all or a part of the second data from the cache, and provide all or the part of the second data to the second controller.

25. A data processing method, wherein a storage system comprises a first controller and a second controller, the first controller and the second controller separately communicate with at least one memory via a shared interface device on which a cache is disposed, and the method comprises:
receiving, by the shared interface device, a write instruction that is sent by the first controller and that instructs to write first data, and a write instruction that is sent by the second controller and that instructs to write third data; and
temporarily storing, by the shared interface device, the first data and the third data in the cache, and asynchronously writing the first data and the third data that are temporarily stored in the cache into a first memory in the at least one memory.

26. A shared interface device, comprising a receiving module, a storage module, and a query module, wherein
the receiving module receives a write instruction that is sent by a first controller and that instructs to write first data, and a write instruction that is sent by a second controller and that instructs to write third data, wherein the first controller and the second controller separately communicate with at least one memory via the shared interface device; and
the storage module is configured to temporarily store the first data and the third data in a cache of the storage module, and asynchronously write the first data and the third data that are temporarily stored in the cache into a first memory in the at least one memory.

27. A computing device, wherein a first controller and a second controller separately communicate with at least one memory via the computing device, the computing device comprises a memory and a processor, the memory comprises a cache, and the processor executes computer instructions stored in the memory, to enable the computing device to perform the method according to claim 23 or 25.

28. The computing device according to claim 27, wherein the computing device is an interface card or a disk enclosure, the interface card is inserted into the first controller or the second controller, and the disk enclosure is configured to install the at least one memory.
